# EUROPÄISCHE PATENTSCHRIFT

(11) **EP 1 397 188 B1**
(45) Veröffentlichungstag und Bekanntmachung des Hinweises auf die Patenterteilung: **14.09.2005**
(21) Anmeldenummer: 02776518.9
(22) Anmeldetag: 04.06.2002
(51) Int. Cl.: B01D 19/04

(54) **ENTSCHÄUMER UND/ODER ENTLÜFTER AUF DER BASIS VON ÖL-IN-WASSER-DISPERSIONEN**
DEFOAMING AGENT AND/OR DEAERATING AGENT BASED ON OIL-IN-WATER DISPERSIONS
AGENTS ANTIMOUSSANTS ET/OU DESAERANTS A BASE DE DISPERSIONS HUILE DANS EAU

(30) Priorität: 05.06.2001 DE 10127245
(43) Veröffentlichungstag der Anmeldung: 17.03.2004
(73) Patentinhaber: BASF Aktiengesellschaft, 67056 Ludwigshafen (DE)
(72) Erfinder: DYLLICK-BRENZINGER, Rainer, 69469 Weinheim (DE); KAMIETH, Markus, 69221 Dossenheim (DE); BONN, Johann, 67258 Hessheim (DE); MATZ, Manfred, 67069 Ludwigshafen (DE); LORENZ, Klaus, 67549 Worms (DE)
(74) Vertreter: Reitstötter - Kinzebach
(86) Internationale Anmeldenummer: PCT/EP2002/006129
(87) Internationale Veröffentlichungsnummer: WO 2002/098532

(56) Entgegenhaltungen:
- WO-A-00/08254
- WO-A-00/44470
- WO-A-94/06894
- DE-A- 2 944 604
- GB-A- 568 510
- GB-A- 658 494
- US-A- 3 652 453
- US-A- 3 673 105

## Beschreibung

Die vorliegende Erfindung betrifft Öl-in-Wasser-Dispersionen, deren Verwendung als Entschäumer und/oder Entlüfter.

In zahlreichen industriellen Prozessen müssen wässrige Lösungen und Suspensionen gehandhabt werden, die aufgrund ihrer Inhaltsstoffe zur Schaumbildung neigen. Diese Schaumbildung erschwert die Prozessführung und muss daher möglichst gering gehalten oder gar vermieden werden. Beispiele für schaumbildende wässrige Zusammensetzungen sind Detergenzien-enthaltende Zusammensetzungen, Saponin-enthaltende Zusammensetzungen, Abwasser in Kläranlagen, Protein-enthaltende Zusammensetzungen wie Soyabohnenextrakte und insbesondere Holzschliff- und/oder Zellstoff-haltige Suspensionen, wie sie insbesondere in der Papierindustrie zur Herstellung von Papier, Pappe oder Karton eingesetzt werden.

Neben der Bildung von Schaum, welcher aus koaleszierenden Luftblasen permanent nachgebildet wird, erweist sich auch die in diesen Systemen eingeschlossene Luft, die in feindisperser, stabiler Form vorliegt, als problematisch. Die Verringerung des Luftgehaltes dieser Systeme ist daher ebenfalls von besonderer Bedeutung.

Aus diesen Gründen setzt man den schaumbildenden wässrigen Zusammensetzungen bei ihrer Verarbeitung und z.T. bereits bei ihrer Herstellung sogenannte Entschäumer und/oder Entlüfter zu, die bereits bei geringen Einsatzkonzentrationen die unerwünschte Schaumbildung unterdrücken, den Gehalt eingeschlossener Luft verringern oder bereits entstandenen Schaum zerstören.

Bei den aus dem Stand der Technik bekannten Entschäumern handelt es sich häufig um wässrige Zusammensetzungen auf der Basis von Öl-in-Wasser-Dispersionen bzw. Emulsionen, deren Ölphase wenigstens eine hydrophobe Substanz, beispielsweise Mineralöle, Silikonöle, Polyalkylenoxide, deren Ester mit Fettsäuren und deren Ether mit langkettigen Alkoholen, native Fette und/oder Öle, Wachse, Esterwachse oder langkettige Alkohole enthält. Verschiedentlich wurde auch über die Verwendung von Destillationsrückständen, die bei der Herstellung von langkettigen Alkoholen nach dem Zieglerverfahren oder bei der Oxosynthese anfallen, berichtet (siehe z.B. EP-A 149812, DE).

In einigen Fällen setzt man der Ölphase zur Wirkungssteigerung eine weitere hydrophobe Substanz zu, z.B. Metallstearate, hydrophobierte Kieselsäuren, teil- oder vollständig mit Fettsäuren veresterte Polyole oder Fettsäuren.

Aus der US 3,673,105, der US 3,923,683 und der DE-A 2944604 sind Entschäumerzusammensetzungen auf Basis von Öl-in-Wasser-Dispersionen bekannt, die neben einem flüssigen Kohlenwasserstoff als Hauptbestandteil, zur Verbesserung der Wirksamkeit hydrophobierte Kieselsäure, ein Bisamid eines Alkylendiamins mit einer C₆-C₁₈-Carbonsäure sowie gegebenenfalls ein Silikonöl enthalten.

Die CA 1143244 beschreibt Entschäumerzusammensetzungen auf Lösemittelbasis, die neben einem wasserunlöslichen Lösungsmittel ein Polyethylenoxid/Polypropylenoxid-Blockcopolymer, ein Fettsäureamid des Ethylendiamins und eine Fettalkoholmischung enthalten.

Aus der EP-A 513173, der EP-A 662172 und der DE-A 4232415 ist bekannt, dass Polyglycerinester, die durch mindestens 20 %ige Veresterung von Polyglycerinen, die als wesentliche Bestandteile Di-, Tri- und Tetraglycerine enthalten, mit Fettsäuren erhältlich sind, die entschäumende/entlüftende Wirkung von Zusammensetzungen auf der Basis von Öl-in-Wasser-Dispersionen verbessern.

Die DE-A 19641076 beschreibt Entschäumerzusammensetzungen auf Basis von Öl-in-Wasser-Dispersionen, deren Ölphase zur Verbesserung der entschäumenden Wirkung wenigstens ein Umsetzungsprodukt eines mit einer Fettsäure teilveresterten Polyols mit einer Dicarbonsäure enthält.

Aus der EP-A 732 134 sind Entschäumerzusammensetzungen auf Basis von Öl-in-Wasser-Dispersionen bekannt, deren Ölphase zur Verbesserung der entschäumenden Wirkung wenigstens einen Ester aus einem Zuckeralkohol mit mindestens 4 OH-Gruppen oder mindestens 2 OH-Gruppen und mindestens einer intramolekularen Etherbindung und einer Fettsäure mit mindestens 20 C-Atomen im Molekül im Molverhältnis ≥ 1:1 enthält.

Die DE-C 19917186 schlägt alkylenverknüpfte oligoharnstoff-Derivate mit entschäumender Wirkung vor, die zumindest an den terminalen Stickstoffatomen Alkyl- oder Arylalkylgruppen aufweisen.

Die Entschäumersysteme des Standes der Technik haben teilweise den Nachteil, dass ihre entschäumende/entlüftende Wirkung bei erhöhter Temperatur, d.h. oberhalb 40°C und insbesondere oberhalb 50°C nur unzureichend ist. Eine entschäumende und entlüftende Wirkung bei höheren Temperaturen ist jedoch für viele industrielle Prozesse wichtig. So arbeitet man beispielsweise bei den modernen Verfahren der Papierherstellung mit geschlossenen Wasserkreisläufen, wodurch ein Temperaturanstieg der wässrigen Einsatzmaterialien auf in der Regel über 50°C und z.T. über 55°C resultiert. Zudem haben die Entschäumer des Standes der Technik zum Teil nur eine unzureichende Langzeitwirkung, d.h. sie verlieren bei längerem Einsatz ihre entschäumende Wirkung. Sie müssen daher nachdosiert werden, was aus wirtschaftlichen Gründen nicht erwünscht ist.

Der vorliegenden Erfindung liegt somit die Aufgabe zugrunde, Entschäumer bzw. Entlüfter für wässrige Systeme bereitzustellen, die auch bei erhöhter Temperatur, z.B. oberhalb 40°C, vorzugsweise oberhalb 50°C und insbesondere bei 55°C und darüber eine gute entschäumende und/oder entlüftende Wirkung aufweisen. Außerdem sollten sie auch eine gute Langzeitwirkung aufweisen.

Diese Aufgabe wird überraschenderweise gelöst durch Öl-in-Wasser-Dispersionen, deren Ölphase neben wenigstens einer in Wasser unlöslichen, bei Raumtemperatur festen, organischen, sauerstoffhaltigen Substanz, wenigstens ein Umsetzungsprodukt von wenigstens einer Amid-Verbindung der allgemeinen Formel I und/oder einer Amidinverbindung der Formel Ia, 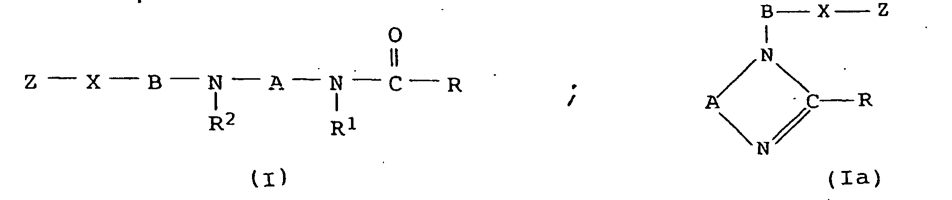 worin die Variablen R, R¹, R², A, B, X und Z die folgenden Bedeutungen aufweisen:
- R: ein aliphatischer Rest mit wenigstens 14 C-Atomen, der gegebenenfalls 1 oder 2 Hydroxylgruppen, 1 oder 2 Doppelbindungen und/oder 1 oder 2 Dreifachbindungen aufweisen kann,
- A, B: unabhängig voneinander C₂-C₂₀-Alkylen, das gegebenenfalls 1 oder 2 OH-Gruppen, 1 oder 2 Doppel- und/oder Dreifachbindungen aufweisen kann und/oder durch ein, zwei oder drei zu Heteroatomen nicht benachbarte Sauerstoffatome unterbrochen sein kann, oder C₅-C₂₀-Cycloalkylen, das gegebenenfalls durch 1 oder 2 OH-Gruppen und/oder durch 1, 2, 3 oder 4 Methylgruppen substituiert sein kann und/oder eine Carbonylfunktion als Ringglied aufweisen kann,
- R¹: Wasserstoff, C₁-C₁₃-Alkyl, C₅-C₁₀-Cycloalkyl, Phenyl oder eine Gruppe der Formel [A¹-X¹]ₘ-Z¹,
- R²: Wasserstoff, C₁-C₁₃-Alkyl, C₅-C₁₀-Cycloalkyl, Phenyl, eine Gruppe C(O)-R oder eine Gruppe der Formel [A²-X²]ₙ-Z²,
- X: Sauerstoff oder eine Gruppe N-R³, worin R³ die folgenden Bedeutungen aufweist: Wasserstoff, eine Gruppe C(O)-R oder eine Gruppe der Formel [A³-X³]ₚ-Z³,
- Z: Wasserstoff oder eine Gruppe [A⁴-X⁴]_{q}-Z⁴,
worin A¹, A², A³, A⁴ unabhängig voneinander für C₂-C₃-Alkylen stehen, X¹, X², X³, X⁴ unabhängig voneinander für Sauerstoff oder eine Gruppe NR^{a} stehen, worin R^{a} unabhängig voneinander Wasserstoff, CH₂CH₂NH₂, CH₂CH₂NHC(O)-R, CH₂CH₂CH₂NH₂, CH₂CH₂CH₂NHC(O)-R oder eine Gruppe C(O)-R bedeutet, Z¹, Z², Z³, Z⁴ unabhängig voneinander für Wasserstoff, CH₂CH₂NH₂, CH₂CH₂NHC(O)-R, CH₂CH₂CH₂NH₂ oder CH₂CH₂CH₂NHC(O)-R stehen und m und q unabhängig voneinander eine Zahl von 1 bis 20, n und p unabhängig voneinander eine Zahl von 1 bis 10 bedeuten,
wobei R¹ mit R² oder R² mit R³ und/oder je zwei Reste R³, R⁴, R^{a}, die an zwei durch eine Alkyleneinheit verbundene Stickstoffatome gebunden sind, auch für C₁-C₄-Alkylen stehen können, das eine Carbonylfunktion aufweisen kann und/oder durch 1, 2 oder 3 Methylgruppen substituiert sein kann,
oder die Gruppe B-X-Z Wasserstoff bedeutet, wenn A für C₆-C₂₀-Alkylen steht, das durch ein oder zwei zu Heteroatomen nicht benachbarte Sauerstoffatome unterbrochen ist, oder für C₅-C₂₀-Cycloalkylen, das gegebenenfalls durch 1 oder 2 OH-Gruppen und/oder durch 1, 2, 3 oder 4 Methylgruppen substituiert sein kann und/oder eine Carbonylfunktion als Ringglied aufweisen kann, steht,
wobei die Amid-Verbindung der Formel I und die Amidinverbindung der allgemeinen Formel Ia wenigstens eine reaktive Gruppe RG, ausgewählt unter alkoholischen OH-Gruppen und aminischen NH- oder NH₂-Gruppen aufweisen,
mit wenigstens einer vernetzend wirkenden Verbindung V, die gegenüber den reaktiven Gruppen RG eine wenigstens bifunktionelle Reaktivität aufweist, enthält.

Amidverbindungen der allgemeinen Formel I sind z.T. aus der EP-A 286336 als Wirksubstanz in Korrosionsinhibitor-Zusammensetzungen oder als Vorstufen für deren Herstellung bekannt. Fettsäureamide des Hydroxyethylpiperazins sind z.B. aus der US 5128473 bekannt. Die DE-A 3309948 beschreibt u.A. die Verwendung von Amidverbindungen und deren Umsetzungsprodukten mit Dicarbonsäuren als Flüssigkeitsverluste vermindernde Verbindungen in Bohrlochbearbeitungsflüssigkeiten.

Gegenstand der vorliegenden Erfindung sind daher Öl-in-Wasser-Dispersionen, deren Ölphase die folgenden Komponenten enthält:
a) wenigstens eine in Wasser unlösliche, bei Raumtemperatur feste, sauerstoffhaltige organische Substanz, ausgewählt unter langkettigen Alkoholen mit einem wenigstens 12 C-Atome aufweisenden aliphatischen Kohlenwasserstoffrest, der durch ein S-Atom oder durch SO oder SO₂ unterbrochen sein kann, Destillationsrückständen, die bei der Herstellung von aliphatischen Alkoholen mit wenigstens 14 C-Atomen anfallen, Mono-, Di- und Triglyceriden von Fettsäuren, Fettsäureestern von aliphatischen Alkoholen mit wenigstens 12 C-Atomen, Fettsäureestern von C₁-C₁₁-Alkanolen und deren Mischungen;
b) wenigstens ein Umsetzungsprodukt von wenigstens einer Amid-Verbindung der oben definierten allgemeinen Formel I und/oder einer Amidinverbindung der allgemeinen Formel Ia, wobei die Amid-Verbindung der Formel I, und die Amidinverbindung des Formel Ia wenigstens eine reaktive Gruppe RG, ausgewählt unter alkoholischen OH-Gruppen und aminischen NH- oder NH₂-Gruppen aufweisen,
   mit wenigstens einer vernetzend wirkenden Verbindung V, die gegenüber den reaktiven Gruppen RG eine wenigstens bifunktionelle Reaktivität aufweist,
sowie gegebenenfalls die folgenden Komponenten:
c) Substanzen, die bekanntermaßen die entschäumende Wirkung von Öl-in-Wasser-Dispersionen verbessern;
d) einen oder mehrere Kohlenwasserstoffe mit einem Siedepunkt oberhalb 200°C (bei Normaldruck).

Gegenstand der vorliegenden Erfindung sind weiterhin die Verwendung dieser Zusammensetzungen als Entschäumer und/oder Entlüfter für wässrige schaumbildende Zusammensetzungen, insbesondere für wässrige, zellstoffhaltige und/oder holzschliffhaltige Zusammensetzungen, wie sie z.B. im Rahmen der Herstellung von Papier, Pappe und Karton eingesetzt werden.

Die bei der Definition der Variablen in Formel I verwendeten Ausdrücke Alkyl, Alkylen und Cycloalkyl sind Sammelbegriffe für individuelle Molekülgruppen, wobei das Präfix Cₙ-Cₘ die Unter- und Obergrenze für die mögliche Kohlenstoffzahl dieser Molekülgruppen angibt.

So bedeutet Alkyl bei der Definition von R einen linearen oder verzweigten aliphatischen Kohlenwasserstoffrest, der wenigstens 14 C-Atome aufweist und durch 1 oder 2 OH-Gruppen substituiert sein kann und der außerdem 1 oder 2 Doppel- oder Dreifachbindungen aufweisen kann. Beispiele für derartige Reste sind gesättigte Reste wie n-Tetradecan-1-yl, Pentadecan-1-yl, n-Hexadecan-1-yl (Palmitinyl), n-Heptandecan-1-yl, n-Octadecan-1-yl (Stearyl), n-Nonadecan-1-yl, n-Eicosan-1-yl (Arachinyl), n-Heneicosan-1-yl, n-Docosan-1-yl (Behenyl), n-Tricosan-1-yl, n-Tetracosan-1-yl (Lignocerin-1-yl), n-Pentacosan-1-yl, Hexacosan-1-yl (Cerotinyl), Heptacosan-1-yl, Nonacosan-1-yl, Triacontan-1-yl, n-Tetradecan-2-yl, Pentadecan-2-yl, n-Hexadecan-2-yl, n-Heptandecan-2-yl, n-Octadecan-2-yl, n-Nonadecan-2-yl, n-Eicosan-2-yl, n-Heneicosan-2-yl, n-Docosan-2-yl, n-Tricosan-2-yl, n-Tetracosan-2-yl, n-Pentacosan-2-yl, Hexacosan-2-yl, Heptacosan-2-yl, Nonacosan-2-yl, Triacontan-2-yl, sowie davon abgeleitete ein- oder zweifach ethylenisch ungesättigte Reste, und/oder hydroxylierte Reste.

C₁-C₁₃-Alkyl steht dementsprechend für einen linearen oder verzweigten Alkylrest mit 1 bis 13 C-Atomen vorzugsweise 1 bis 8 und insbesondere 1 bis 6 C-Atomen wie Methyl, Ethyl, n-Propyl, isoPropyl, n-Butyl, 2-Butyl, iso-Butyl, tert.-Butyl, n-Pentyl, 2-Pentyl, iso-Pentyl, Neopentyl, n-Hexyl, 2-Methyl-1-pentyl, n-Heptyl, 2-Ethylhex-1-yl, 2-Methylhex-1-yl, n-Octyl, n-Decyl, 2-Methyldec-1-yl, n-Dodecyl, 2-Methyldodecyl, etc.

Alkylen steht für eine zweiwertige lineare oder verzweigte Alkylgruppe, wobei die beiden freien Valenzen sich vorzugsweise an verschiedenen C-Atomen befinden. C₂-C₃-Alkylen steht demnach z.B. für 1,2-Ethylen, 1,2- oder 1,3-Propylen. C₂-C₂₀-Alkylen steht demnach für die bei C₂-C₃-Alkylen genannten Gruppen sowie z.B. für Butan-1,2-diyl, -2,3-diyl, -1,3-diyl oder -1,4-diyl, Pentan-1,2-diyl, -2,3-diyl, -1,3-diyl, -1,4-diyl, -2,4-diyl oder -1,5-diyl, Hexan-1,6-diyl, 2,2,4-Trimethylpentan-1,4-diyl, Octan-1,8-diyl etc. In den Alkylengruppen können auch ein oder zwei Kohlenstoffatome durch Sauerstoffatome ersetzt sein, die weder zueinander noch den Verknüpfungsstellen benachbart sind. Derartige Alkylengruppen weisen in der Regel 5 bis 20 C-Atome auf. Beispiele hierfür sind: 3-Oxapentan-1,5-diyl, 3-Oxahexan-1,6-diyl, 4-Oxaheptan-1,7-diyl, 3,6-Dioxaoctan-1,8-diyl, 3,7-Dioxanonan-1,9-diyl, 4,7-Dioxadecan-1,10-diyl, 4,8-Dioxaundecan-1,11-diyl, 4,9-Dioxadodecan-1,12-diyl, 4,11-Dioxatetradecan-1,14-diyl.

C₅-C₁₀-Cycloalkyl steht für einen einwertigen mono- oder bicycloaliphatischen Rest mit 5 bis 10, vorzugsweise 5 bis 8 C-Atomen wie Cyclopentyl, Cyclohexyl oder Cycloheptyl.

C₅-C₂₀-Cycloalkylen steht für einen zweiwertigen mono- oder bicycloaliphatischen Rest mit 5 bis 20 C-Atomen, wobei die beiden freien Valenzen sich vorzugsweise an verschiedenen C-Atomen befinden und im Falle bicyclischer Gruppen die Ringe anelliert, spiro oder durch eine Alkylengruppe miteinander verknüpft sein können. Beispiele hierfür sind Cyclopentan-1,2- und -1,3-diyl, Cyclohexan-1,2-diyl, -1,3-diyl und -1,4-diyl, Cycloheptan-1,2-diyl, -1,3-diyl und 1,4-diyl, Norbornan-2,3-diyl, 2,2-Bis(cyclohexyl-4'-yl)propan.

Im Hinblick auf die entschäumende und entlüftende Wirkung der erfindungsgemäßen Zusammensetzungen steht R vorzugsweise für einen Rest mit wenigstens 17 C-Atomen, insbesondere mit wenigstens 19 C-Atomen und besonders bevorzugt mit wenigstens 21 C-Atomen. In der Regel wird R nicht mehr als 40 C-Atome, vorzugsweise nicht mehr als 30 C-Atome aufweisen. Vorzugsweise weist R keine Hydroxylgruppen auf. Bevorzugt ist R gesättigt. Besonders bevorzugt steht R für einen gesättigten und unverzweigten Alkylrest, der vorzugsweise in der 1-Position mit der Carbonylgruppe verknüpft ist. Ganz besonders bevorzugt steht R für einen linearen Heneicosan-1-yl-Rest.

Bevorzugt sind solche Verbindungen der allgemeinen Formel I sowie deren Umsetzungsprodukte, die wenigstens 2 und insbesondere wenigstens 3 Gruppen der allgemeinen Formel R-C(O)- aufweisen. Bevorzugt sind auch Gemische von Verbindungen der allgemeinen Formel I, die im Mittel wenigstens 1,5, insbesondere wenigstens 2 und besonders bevorzugt wenigsten 3 Gruppen der allgemeinen Formel R-C(O)- aufweisen.

Für die entschäumende/entlüftende Wirkung der erfindungsgemäßen Dispersionen hat es sich als vorteilhaft erwiesen, wenn man als Komponente b) solche Substanzen einsetzt, die weniger als 0,05 mol/kg aminische NH- oder NH₂-Gruppen, also nicht amidierte, sekundäre oder primäre Aminogruppen aufweisen. Die Aminzahl derartiger Substanzen (bestimmt nach DIN 16945, S. 9, angegeben in mg KOH/g Substanz) wird vorzugsweise einen Wert von 3,0, insbesondere von 2,0 und speziell von 1,0 nicht überschreiten. In der Regel wird allerdings die Aminzahl der Komponente b) herstellungsbedingt einen Wert von 0,1 und häufig von 0,2 nicht unterschreiten.

In einer besonders bevorzugten Ausführungsform liegen daher in den Verbindungen der Formel I weniger als 10% der Stickstoffatome in Form von aminischen NH-Gruppen, bzw. NR₂-Gruppen vor. Sofern die Verbindungen I in Form von Mischungen eingesetzt werden, handelt es sich um die mittlere Anzahl aminischer Gruppen je Molekül. In dieser Ausführungsform sind die Verbindungen somit im wesentlichen frei von aminischen NH-Gruppen, bzw. NH₂-Gruppen.

In einer anderen bevorzugten Ausführungsform der vorliegenden Erfindung verwendet man als Komponente b) eine Zusammensetzung, die durch Umsetzung von wenigstens einer Verbindung der allgemeinen Formel I, die wenigstens eine, z.B. eine, zwei oder drei reaktive funktionelle Gruppen RG, ausgewählt unter NH-Gruppen, NH₂-Gruppen und OH-Gruppen, aufweist, mit einer vernetzend wirkenden, gegenüber den Gruppen RG wenigstens bifunktionellen Verbindung V erhältlich ist. Selbstverständlich können als Komponente b) auch solche Zusammensetzungen eingesetzt werden, die durch Umsetzung einer Mischung von Verbindungen der allgemeinen Formel I, die im Mittel wenigstens eine, vorzugsweise 1 bis 2 und insbesondere 1 bis 1,5 der obengenannten reaktiven Gruppen RG aufweist, mit den vernetzend wirkenden Verbindungen V erhalten werden.

Unter vernetzend wirkenden Verbindungen V versteht man hier und im Folgenden solche Verbindungen, die gegenüber den reaktiven Gruppen RG der Verbindungen I wenigstens bifunktionell sind, also mit wenigstens zwei der reaktiven Gruppen RG unter Bindungsbildung reagieren können. Derartige Verbindungen V weisen in der Regel wenigstens zwei reaktive Gruppen RG' und/oder wenigstens eine bifunktionell-reaktive Gruppe RG" auf, die zu den vorgenannten Gruppen RG komplementär sind. Beispiele für reaktive Gruppen RG' sind Carboxylgruppen sowie deren Ester- und Amid-bildenden Derivate wie Anhydrid-, Säurechlorid-, CONH₂-, Isocyanat und Niederalkylester-Gruppen. Weitere Beispiele für RG' sind Oxirangruppen sowie ethylenisch ungesättigte Doppelbindungen, die in Konjugation zu einer Carbonylgruppe stehen. Beispiele für reaktive funktionelle Gruppen RG" sind die von Kohlensäure abgeleiteten funktionellen Gruppen wie Carbonatgruppen, Harnstoffgruppen, Thioharnstoffgruppen und dergleichen.

Beispiele für geeignete vernetzend wirkende Verbindungen V sind:
(1) Derivate der Kohlensäure wie Ethylencarbonat, Propylencarbonat, Diethylcarbonat und Harnstoff;
(2) aliphatische und cycloaliphatische Di-, Tri- und Tetracarbonsäuren, mit vorzugsweise 2 bis 20 C-Atomen, und insbesondere 4 bis 10 C-Atomen, die gegebenenfalls auch 1 oder 2 tertiäre Stickstoffatome oder Sauerstoffatome im aliphatischen bzw. im cycloaliphatischen Molekülteil aufweisen können, z.B. Oxalsäure, Malonsäure, Bernsteinsäure, Glutarsäure, Adipinsäure, Pimelinsäure, Azelainsäure, Korksäure, Sebacinsäure, Citronensäure, Propantricarbonsäure, Ethylendiamintetraessigsäure und Butantetracarbonsäure sowie die Ester- und Amid-bildenden Derivate dieser Carbonsäuren;
(3) α,β-ethylenisch ungesättigte Mono-, Di- und Tricarbonsäuren mit vorzugsweise 3 bis 10 C-Atomen wie Acrylsäure, Methacrylsäure, Fumarsäure, Maleinsäure, Itakonsäure und Aconitsäure sowie die Ester- und Amid-bildenden Derivate dieser Carbonsäuren;
(4) aromatische Di-, Tri- und Tetracarbonsäuren wie Phthalsäure, Isophthalsäure und Terephthalsäure sowie die Ester- und Amidbildenden Derivate dieser Carbonsäuren;
(5) aliphatische, cycloaliphatische und aromatische Di- oder Triisocyanate mit vorzugsweise 4 bis 20 C-Atomen wie Hexamethylendiisocyanat, Isophorondiisocyanat, Toluoldiisocyanat, 2,2'-(4-isocyanatophenyl)propan;
(6) Verbindungen mit wenigstens 2, z.B. 2, 3 oder 4 GlycidylGruppen, z.B. Glycidylether von aliphatischen, cycloaliphatischen oder aromatischen Alkoholen mit 2 bis 4 OH-Gruppen und vorzugsweise 2 bis 20 C-Atomen, z.B. Glycidylether von Propandiol, Butandiol, Hexandiol, Diethylenglycol, Cyclohexandiol, 2,2-Bis-(p-Hydroxyphenyl)propan, von niedermolekularen Novolacken, von Trimethylolpropan, und dergleichen.

Bevorzugte Verbindungen V sind die Verbindungen der oben genannten Gruppen (1) bis (3). Besonders günstige anwendungstechnische Eigenschaften weisen die Umsetzungsprodukte von I mit den Di- oder Tricarbonsäuren der Gruppen (2) und (3) sowie α,β-monoethylenisch ungesättigte Carbonsäuren, und insbesondere mit Fumarsäure bzw. deren Ester- oder Amid-bildenden Derivaten auf. Besonders bevorzugt ist auch Acrylsäure bzw. deren Ester- oder Amid-bildenden Derivate.

Man vermutet, dass in den vernetzend wirkenden Verbindungen V der Gruppe (3) sowohl die Carboxylgruppen als auch die α,β-ethylenisch ungesättigten Doppelbindungen als reaktive Gruppen RG' wirken, wobei die α,β-ethylenisch ungesättigte Doppelbindung im Sinne einer Michael-Reaktion mit den reaktiven funktionellen Gruppen RG der Verbindung I reagiert.

Bevorzugt sind die Umsetzungsprodukte von solchen Verbindungen I bzw. von Mischungen von Verbindungen I, die im Mittel 1 bis 2 und insbesondere 1,0 bis 1,5 reaktive Gruppen RG im Molekül aufweisen.

Bevorzugt sind solche Umsetzungsprodukte von Verbindungen I mit Verbindungen V der Gruppen (2) bis (4), die noch einen geringen Anteil freier Carboxylgruppen aufweisen. Diese Verbindungen weisen eine Säurezahl (angegeben in mg KOH pro g Umsetzungsprodukt, gemäß DIN 53402) auf, die in der Regel nicht mehr als 60 beträgt.

Häufig weisen diese Zusammensetzungen eine Säurezahl im Bereich von 5 bis 40 und insbesondere von 10 bis 30 auf.

Unter den Verbindungen der allgemeinen Formel I werden solche Verbindungen bevorzugt, worin die Variablen A, B, R¹, R², X und Z in Formel I für sich oder vorzugsweise gemeinsam die folgenden Bedeutungen aufweisen:
- A, B: unabhängig voneinander C₂-C₄-Alkylen,
- R¹: Wasserstoff oder [A¹-X¹]ₘ-H, worin A¹ für C₂-C₃-Alkylen und X¹ für Sauerstoff oder eine Gruppe NR^{a} stehen, worin R^{a} unabhängig voneinander Wasserstoff oder C(O)R bedeutet, und m für eine Zahl von 1 bis 10, insbesondere für 1 oder 2 steht,
- R²: Wasserstoff oder [A²-X²]ₙ-H, worin A² für C₂-C₃-Alkylen und X² für Sauerstoff oder eine Gruppe NR^{a} stehen, worin R^{a} unabhängig voneinander Wasserstoff oder C(O)R bedeutet, und n für eine Zahl von 1 bis 10, insbesondere für 1 oder 2 steht,
- R¹: bildet mit R² eine C₂-C₄-Alkylengruppe oder R² bildet mit R³ eine C₂-C₄-Alkylengruppe,
- X: Sauerstoff oder eine Gruppe N-R³, worin R³ die folgenden Bedeutungen aufweist: Wasserstoff oder eine Gruppe C(O)-R,
- Z: Wasserstoff oder [A⁴-X⁴]_{q}-H, worin A⁴ für C₂-C₃-Alkylen und X⁴ für Sauerstoff oder eine Gruppe NR^{a} stehen, worin R^{a} unabhängig voneinander Wasserstoff oder C(O)R bedeutet, und q für eine Zahl von 1 bis 10, insbesondere für 1, 2, 3 oder 4 steht.

Unter den Verbindungen der allgemeinen Formel I werden außerdem solche Verbindungen bevorzugt, worin die Gruppe B-X-Z Wasserstoff bedeutet:
- A: für C₅-C₂₀-Alkylen steht, das durch ein oder zwei zu Heteroatomen nicht benachbarte Sauerstoffatome unterbrochen ist,
- R¹: Wasserstoff oder eine Gruppe der Formel [A¹-X¹]ₘ-H, worin A¹ für C₂-C₃-Alkylen und X¹ für Sauerstoff oder eine Gruppe NR^{a} stehen, worin R^{a} unabhängig voneinander Wasserstoff oder C(O)R bedeutet, und m für eine Zahl von 1 bis 10, vorzugsweise 1 oder 2 steht und
- R²: Wasserstoff oder eine Gruppe C(O)-R bedeutet.

Besonders bevorzugte Verbindungen der allgemeinen Formel I werden durch die nachstehend aufgeführten allgemeinen Formeln I-A bis I-H' beschrieben:

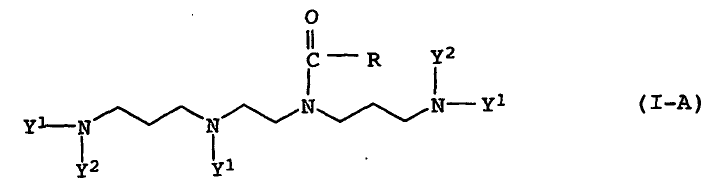

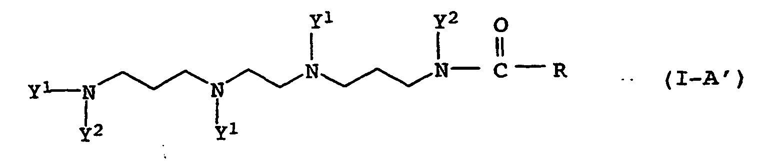

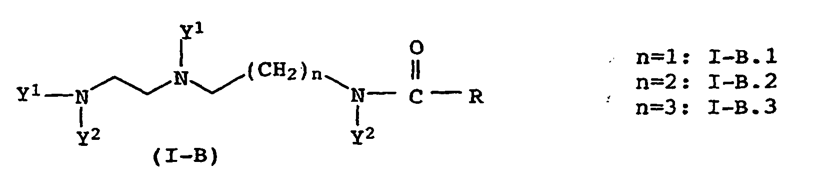

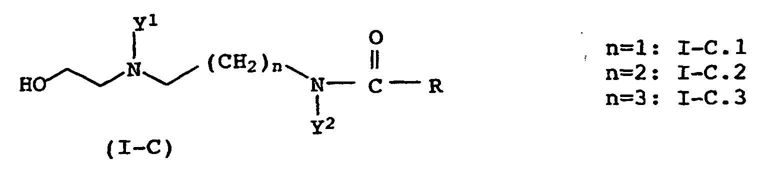

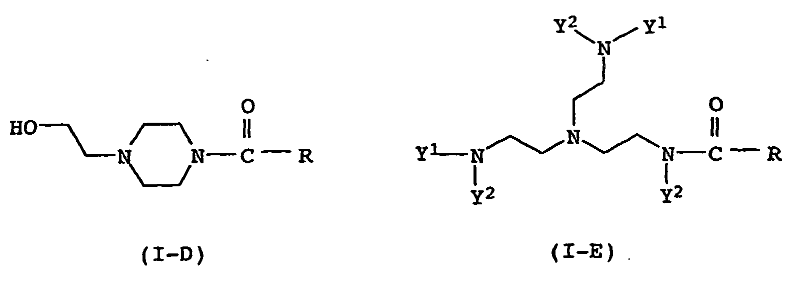

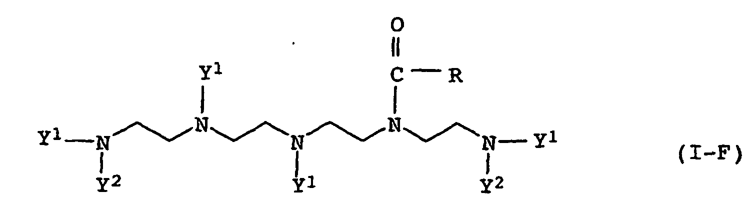

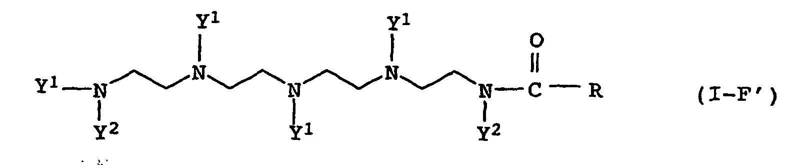

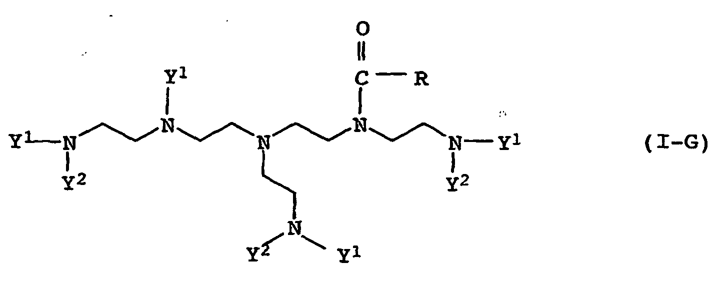

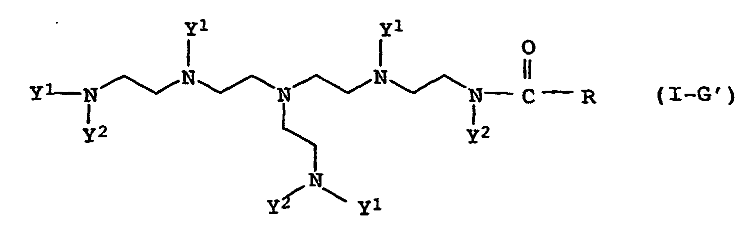

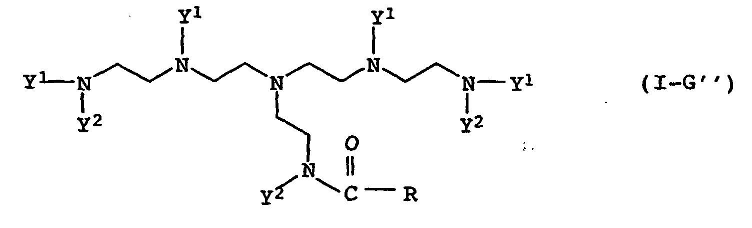

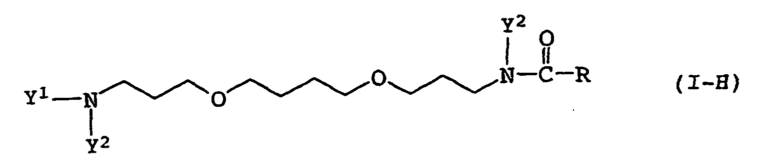

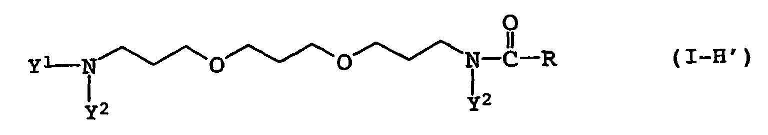

Hierin stehen Y¹ unabhängig voneinander für Wasserstoff, eine Gruppe [CH₂-CH₂-O]ₖH, eine Gruppe [CH₂-CH₂-O]ₖC(O)R oder eine Gruppe C(O)-R, worin R die vorgenannte Bedeutung aufweist. Y² bedeutet unabhängig voneinander Wasserstoff, eine Gruppe [CH₂-CH₂-O]ₖH oder eine Gruppe [CH₂-CH₂-O]ₖC(O)R, wobei k für 1 oder 2 steht.

Unter den Verbindungen I-A bis I-H' sind besonders solche Verbindungen bevorzugt, worin im Mittel weniger als 10 % der Gruppen Y¹ für Wasserstoff stehen, d.h. diese Verbindungen weisen eine Aminzahl unterhalb 2 und insbesondere nicht mehr als 1 auf. Insbesondere bevorzugt sind solche Verbindungen I-A bis I-H', worin wenigstens 90 % der Gruppen Y¹ für eine Gruppe C(O)R stehen. Y² steht dann bevorzugt für Wasserstoff. Ebenfalls besonders bevorzugt sind solche Verbindungen I-A bis I-H' mit Aminzahlen unterhalb 2 und insbesondere bis maximal 1, worin ein Teil der Gruppen Y¹ und/oder Y² für Reste [CH₂CH₂-O]ₖ-H oder [CH₂CH₂-O]ₖ-C(O)R stehen, die verbleibenden Gruppen Y¹ für Reste C(O)R und die verbleibenden Gruppen Y² für Wasserstoff stehen. In diesen Verbindungen beträgt das molare Verhältnis von CH₂-CH₂-O-Einheiten zu Stickstoffatomen vorzugsweise 1:5 bis 2:1. Ganz besonders bevorzugt sind unter den vorgenannten Verbindungen I-A bis I-H' die Verbindungen der Formeln I-A, I-A' und I-B.

Besonders bevorzugt sind weiterhin die Umsetzungsprodukte von Verbindungen der allgemeinen Formeln I-A bis I-H', insbesondere von den Verbindungen I-B, die noch wenigstens eine, vorzugsweise 1 bis 2, reaktive Gruppen RG aufweisen, mit den vorgenannten vernetzend wirkenden Verbindungen V, vorzugsweise mit den als bevorzugt angegebenen Carboxylgruppen-enthaltenden Vernetzern V der Gruppen (2) und (3), bzw. mit deren Ester-/Amid-bildenden Derivaten, insbesondere mit α,β-ethylenisch ungesättigten Mono-, Di- und Tricarbonsäuren und besonders bevorzugt mit Fumarsäure oder Acrylsäure. Ebenfalls bevorzugt sind die Umsetzungsprodukte von Mischungen der Verbindungen I-A bis I-H', insbesondere einer Mischung zweier Verbindungen I-B, die im Mittel 1 bis 2 reaktive Gruppen RG, insbesondere 1,0 bis 1,5 reaktive Gruppen RG aufweisen. Insbesondere weisen die Umsetzungsprodukte die oben genannten Aminzahlen auf. Die Säurezahl dieser Umsetzungsprodukte liegt vorzugsweise ebenfalls in den oben genannten Bereichen, z.B. im Bereich von 5 bis 40.

Die Herstellung der Amidverbindungen I gelingt in der Regel durch Umsetzung von Aminen der allgemeinen Formel II 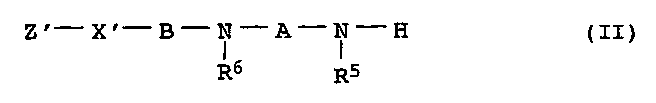 mit einer langkettigen Carbonsäure der Formel R-COOH oder einem Amid bzw. Ester-bildenden Derivat dieser Carbonsäure, wobei R die zuvor angegebenen Bedeutungen aufweist. In Formel II weisen die Variablen R⁵, R⁶, A, B, X' und Z' die folgenden Bedeutungen auf:
- A, B: unabhängig voneinander C₂-C₂₀-Alkylen, das gegebenenfalls 1 oder 2 OH-Gruppen, 1 oder 2 Doppel- und/oder Dreifachbindungen aufweisen und/oder durch ein, zwei oder drei zu Heteroatomen nicht benachbarte Sauerstoffatome unterbrochen sein kann, oder C₅-C₂₀-Cycloalkylen, das gegebenenfalls durch 1 oder 2 OH-Gruppen und/oder durch 1, 2, 3 oder 4 Methylgruppen substituiert sein kann und/oder eine Carbonylfunktion als Ringglied aufweisen kann,
- R⁵: Wasserstoff, C₁-C₁₃-Alkyl, C₅-C₁₀-Cycloalkyl, Phenyl oder eine Gruppe der Formel [A⁵-X⁵]ᵣ-H,
- R⁶: Wasserstoff, C₁-C₁₃-Alkyl, C₅-C₁₀-Cycloalkyl, Phenyl oder eine Gruppe der Formel [A⁶-X⁶]ₛ-H,
- X': Sauerstoff oder eine Gruppe N-R⁷, worin R⁷ die folgenden Bedeutungen aufweist: Wasserstoff, eine Gruppe C(O)-R oder eine Gruppe der Formel [A⁷-X⁷]ₜ-H,
- Z': Wasserstoff oder eine Gruppe [A⁸-X⁸]ᵤ-H,
worin A⁵, A⁶, A⁷, A⁸ unabhängig voneinander für C₂-C₃-Alkylen stehen, X⁵, X⁶, X⁷, X⁸ unabhängig voneinander für Sauerstoff oder eine Gruppe NR^{b} stehen, worin R^{b} für Wasserstoff, CH₂CH₂NH₂ oder CH₂CH₂CH₂NH₂ steht, und r und u unabhängig voneinander eine Zahl von 0 bis 21, s und t unabhängig voneinander eine Zahl von 0 bis 11 bedeuten,
wobei R⁵ mit R⁶ oder R⁶ mit R⁷ und/oder je zwei Resten R⁷, R⁸, R^{b}, die an zwei durch eine Alkyleneinheit verbundene Stickstoffatome gebunden sind, auch für C₁-C₄-Alkylen stehen können, das eine Carbonylfunktion aufweisen kann und/oder durch 1, 2 oder 3 Methylgruppen substituiert sein kann
oder die Gruppe Z'-X'-B Wasserstoff bedeutet, wenn A für C₆-C₂₀-Alkylen steht, das durch ein, zwei oder drei zu Heteroatomen nicht benachbarte Sauerstoffatome unterbrochen ist, oder für C₅-C₂₀-Cycloalkylen steht, das gegebenenfalls durch 1 oder 2 OH-Gruppen und/oder durch 1, 2, 3 oder 4 Methylgruppen substituiert sein kann und/oder eine Carbonylfunktion als Ringglied aufweisen kann.

Hinsichtlich bevorzugter Bedeutungen der Variablen A, B in Formel II gilt das zuvor für die Verbindungen der Formel I Gesagte entsprechend. Bevorzugte Bedeutungen der Variablen R⁵, R⁶, X' und Z' sind:
- R⁵: Wasserstoff oder eine Gruppe der Formel [A⁵-X⁵]ᵣ-H, worin A⁵ C₂-C₃-Alkylen und X⁵ Sauerstoff oder NH bedeuten und r für eine Zahl von 1 bis 10, insbesondere für 1 oder 2 steht,
- R⁶: Wasserstoff, [A⁶-X⁶]ₛ-H, worin A⁶ C₂-C₃-Alkylen und X⁶ Sauerstoff oder NH bedeuten und s für eine Zahl von 1 bis 10 und insbesondere für 1 oder 2 steht, oder
- R⁵: bildet mit R⁶ eine C₂-C₄-Alkylengruppe oder R⁶ bildet mit R⁷ eine C₂-C₄-Alkylengruppe,
- X': Sauerstoff oder eine Gruppe N-R⁷, worin R⁷ für Wasserstoff steht,
- Z': Wasserstoff oder eine Gruppe [A⁸-X⁸]ᵤ-H, worin A⁸ für C₂-C₃-Alkylen und X⁸ für Sauerstoff oder NH stehen und u für eine Zahl von 1 bis 10, insbesondere für 1, 2, 3 oder 4 steht.

Unter den Aminen der allgemeinen Formel II sind solche Verbindungen bevorzugt, worin die Gruppe Z'-X'-B Wasserstoff bedeutet und
- A: für C₅-C₂₀-Alkylen steht, das durch ein oder zwei zu Heteroatomen nicht benachbarte Sauerstoffatome unterbrochen ist,
- R⁵: Wasserstoff oder eine Gruppe der Formel [A⁵-X⁵]ᵣ-H, worin A⁵ C₂-C₃-Alkylen und X⁵ Sauerstoff oder NH bedeuten und r für eine Zahl von 1 bis 10, insbesondere für 1 oder 2 steht und
- R²: Wasserstoff bedeutet.

Beispiele für bevorzugte Amine II sind die Amine der allgemeinen Formeln II-A bis II-H':

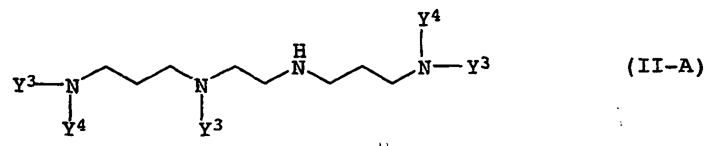

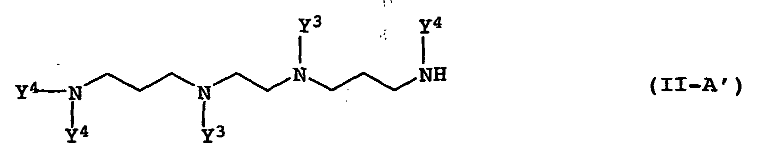

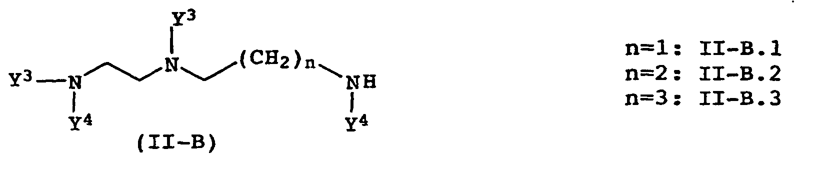

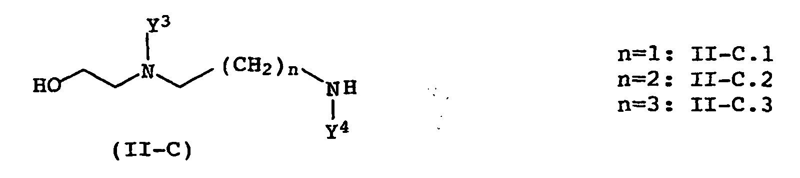

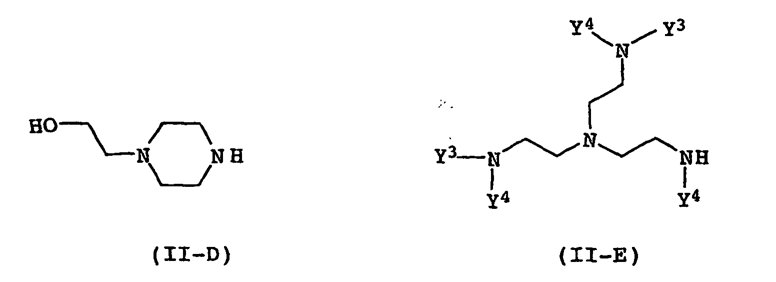

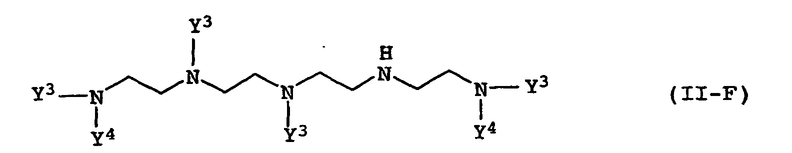

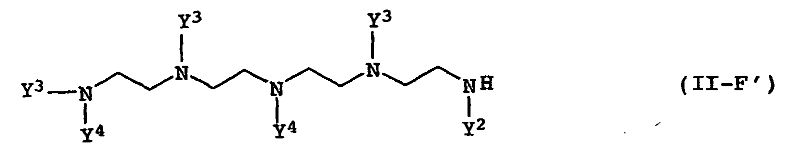

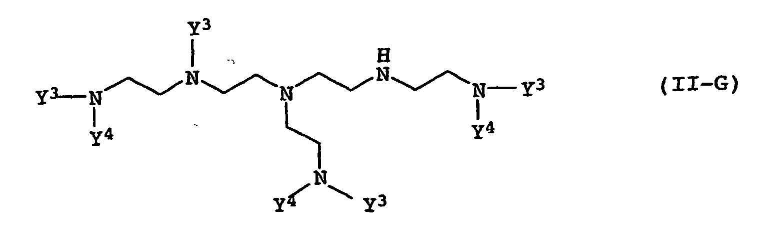

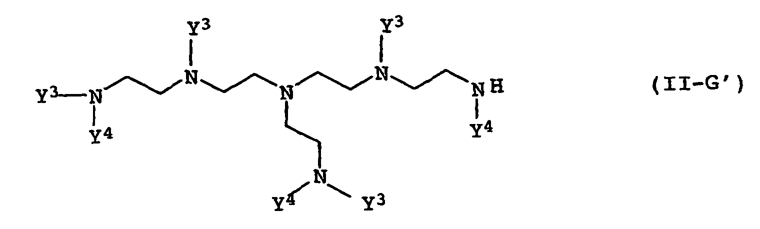

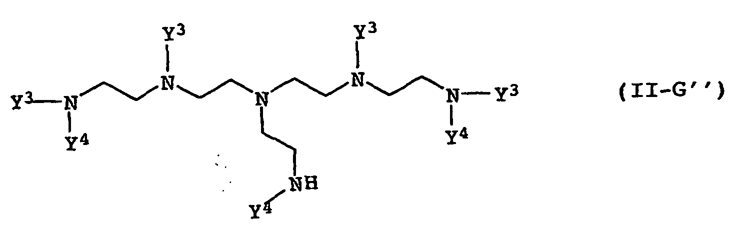

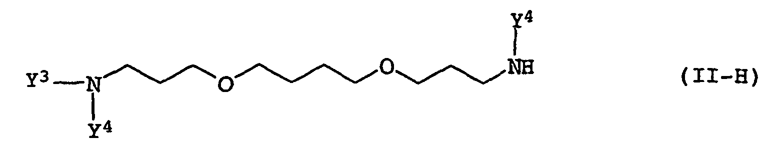

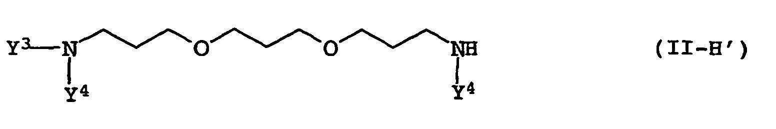

Hierin stehen Y³ und Y⁴ unabhängig voneinander für Wasserstoff oder eine Gruppe [CH₂-CH₂-O]ₖH worin k die zuvor genannte Bedeutung aufweist. Insbesondere steht wenigstens eine der Variablen Y³ und Y⁴, insbesondere wenigstens 2 und besonders bevorzugt alle der Variablen Y³ und Y⁴ für Wasserstoff.

Geeignete Amid- bzw. Esterbildende Derivate der Carbonsäuren R-COOH sind deren Anhydride, z.B. deren gemischte Anhydride mit Ameisensäure, deren Methyl- und Ethylester sowie deren Säurechloride.

Zur Herstellung der Verbindungen I werden die Amine II mit der jeweiligen Carbonsäure oder eine Mischung von Carbonsäuren oder mit den amidbildenden Derivaten davon unter üblichen Amidierungsbedingungen umgesetzt. Das Molverhältnis von Carbonsäure zu aminischen NH- bzw. NH₂-Gruppen in II liegt in der Regel im Bereich von 0,1:1 bis etwa 1,1:1, vorzugsweise im Bereich von 0,4:1 bis 1,05:1 und insbesondere im Bereich von 0,6:1 bis 1:1.

Häufig wird man die Carbonsäure, bzw. ihr Derivat, und die Verbindung II in einem Molverhältnis einsetzen, das der Stöchiometrie der gewünschten Verbindung I entspricht, wobei Abweichungen von der gewünschten Stöchiometrie von bis zu 20 %, vorzugsweise bis zu 10 %, bezogen auf das gewünschte Molverhältnis unproblematisch sind. Sofern eine nahezu vollständige Amidierung der Verbindung I gewünscht wird, arbeitet man in der Regel bei einem Molverhältnis von Carbonsäure zu aminischen Stickstoffen im Bereich von 0,8:1 bis etwa 1:1,1, und insbesondere im Bereich von 0,9:1 bis etwa 1:1. Sofern auch eine Veresterung der gegebenenfalls vorhandenen OH-Gruppen gewünscht ist, wird man selbstverständlich eine größere Menge an Carbonsäure bzw. deren Derivat einsetzen, die in der Regel bis zu 1,1 Äquivalent, bezogen auf die Summe aller OH-, NH und NH₂-Gruppen in II betragen kann.

Häufig wird man das Amin II mit der Carbonsäure selber umsetzen. Die Umsetzung kann sowohl in einem Lösungsmittel als auch in Substanz erfolgen, wobei die letztere Vorgehensweise bevorzugt ist.

Sofern man die Umsetzung in einem Lösungsmittel durchführt, wird man vorzugsweise ein organisches Lösungsmittel wählen, das als Schleppmittel für das bei der Umsetzung gebildete Wasser geeignet ist, z.B. Benzol, Toluol, Ethylbenzol, Xylole, sowie aliphatische und cycloaliphatische Lösungsmittel und deren Mischungen.

Häufig erfolgt die Amidierung von II mit einem für die Reaktanden geeigneten Amidierungskatalysator. Sofern die Umsetzung von II mit einer Carbonsäure, einem Anhydrid oder einem Ester erfolgt, setzt man typischerweise eine Säure, z.B. eine anorganische Säure wie Phosphorsäure, phosphorige Säure, Hypophosphorige Säure, Schwefelsäure, eine organische Sulfonsäure wie p-Toluolsulfonsäure, Benzolsulfonsäure oder Naphthalinsulfonsäure, Verbindungen des vierwertigen Titans, Zinns oder zirkons, insbesondere deren Oxide und Alkoholate oder Mischungen dieser Säuren als Amidierungskatalysator ein. Die Katalysator-Säure wird vorzugsweise in einer Menge von 0,1 bis 5 Gew.-% und insbesondere in einer Menge von 0,2 bis 2 Gew.-%, bezogen auf das Gesamtgewicht der Einsatzstoffe eingesetzt. Bevorzugt erfolgt die Umsetzung von II mit der Carbonsäure in Gegenwart von Hypophosphoriger Säure oder einer Mischung aus hypophosphoriger Säure und einer organischen Sulfonsäure im Mengenverhältnis von 10:1 bis 1:10.

Die Amidierung kann nach einer anderen Variante auch ohne Zusatz eines Amidierungskatalysators erfolgen.

Die für die Umsetzung erforderlichen Reaktionstemperaturen hängen naturgemäß von der Reaktivität der Säure bzw. des Säurederivats ab und liegen in der Regel im Bereich von 30°C bis 250°C und vorzugsweise im Bereich von 100°C bis 200°C und speziell im Bereich von 120°C bis 180°C. Die Reaktionsdauer beträgt in der Regel wenigstens 1 h, vorzugsweise 2 bis 20 h und insbesondere 3 bis 15 h.

Bei der Umsetzung der Amine II mit der Carbonsäure R-COOH fallen die Verbindungen I je nach gewählter Stöchiometrie in einheitlicher Form oder in Form von Mischungen mit unterschiedlichem Amidierungsgrad und/oder in Form von Isomerengemischen an. Für den Einsatz der Verbindungen I in den erfindungsgemäßen Dispersionen bedarf es in der Regel keiner Auftrennung des Gemischs in die einzelnen Verbindungen I. Jedoch kann der Fachmann eine derartige Auftrennung mit üblichen Methoden, z.B. chromatographischen Methoden vornehmen, sofern dies erwünscht wird. Häufig wird man jedoch auf eine Auftrennung der Reaktionsmischung verzichten und die bei der Umsetzung erhaltenen, wachsartigen Gemische von Verbindungen I direkt als Komponente b) in den erfindungsgemäßen Dispersionen einsetzen.

Eine weitere Ausführungsform der Erfindung sind solche Dispersionen, deren Komponente b) durch partielle Amidierung eines Amins II, das vorzugsweise ausgewählt ist unter den Aminen II-A bis II-H', insbesondere eines Amins II-B und speziell Diethylentriamin und anschließende Umsetzung der dabei erhaltenen Verbindung I, die noch reaktive Gruppen RG aufweist, mit einem wenigstens bifunktionellen Vernetzer V erhältlich ist. Hinsichtlich der bevorzugten Vernetzer gilt das oben Gesagte. Insbesondere wird Fumarsäure als Vernetzer bevorzugt. Unter dem Amidierungsgrad in % versteht man den Anteil der aminischen NH- bzw. NH₂-Gruppen von II, die amidiert, d.h. in eine Gruppe N-C(O)-R bzw. in eine Gruppe NH-C(O)-R umgewandelt wurden. Der Amidierungsgrad entspricht in der Regel dem Molverhältnis von Carbonsäure R-COOH (bzw. deren Derivat) zur Anzahl der NH- bzw. NH₂-Gruppen von II.

Bevorzugt wird die Amidierung im ersten Schritt soweit geführt, dass die dabei erhaltenen Verbindungen I bzw. deren Mischungen im Mittel 1 bis 2 und insbesondere 1 bis 1,5 der vorgenannten reaktiven Gruppen RG, insbesondere NH- oder NH₂-Gruppen, je Molekül aufweisen. Die Anzahl der freien reaktiven Gruppen RG kann der Fachmann in bekannter Weise durch die Stöchiometrie von Amin II zu Carbonsäure RCOOH bzw. ihrem Amid-bildenden Derivat steuern. Auch kann er vorzugsweise auf einen wenigstens 90 %igen Umsatz, insbesondere einen wenigstens 95 %igen Umsatz, der Säurekomponente RCOOH achten.

Die anschließende Umsetzung mit dem wenigstens bifunktionellen Vernetzer V erfolgt in der Regel unter den für die Umsetzung des Vernetzers mit den vorgenannten reaktiven Gruppen RG üblichen Reaktionsbedingungen und vorzugsweise unter den für die Amidierung angegebenen Reaktionsbedingungen.

In der Regel wird man die Menge an Vernetzer V so wählen, dass ein Produkt mit einer möglichst geringen mittleren Säurezahl, vorzugsweise einer Säurezahl kleiner 50 und insbesondere kleiner 40 resultiert. Hierzu wird man den Vernetzer V in einer Menge einsetzen, dass das Molverhältnis von reaktiven Gruppen RG zu Funktionalität F des Vernetzers, also das Molverhältnis RG:F im Bereich von 0,9:1 bis 1:2 und vorzugsweise im Bereich von 0,9:1 bis etwa 1:1,8 liegt. Hierbei ist zu berücksichtigen, dass α,β-ethylenisch ungesättigte Carbonsäuren sowohl über die Carboxylgruppen als auch über die ethylenisch ungesättigte Doppelbindung mit den reaktiven Gruppen RG reagieren können. Dementsprechend weist eine α,β-ethylenisch ungesättigte Monocarbonsäure eine Funktionalität von 2 und eine α,β-ethylenisch ungesättigte Dicarbonsäure eine Funktionalität von 3 auf.

In einer ganz bevorzugten Ausführungsform der vorliegenden Erfindung verwendet man als Komponente b) eine Zusammensetzung, die erhältlich ist durch i) Umsetzung eines Amins der allgemeinen Formel IIb, insbesondere eines Amins IIb, worin Y³ und Y⁴ für Wasserstoff stehen, mit einer Carbonsäure R-COOH oder mit einem Amid-bildenden Derivat davon, insbesondere Behensäure im Molverhältnis von 1:0,8 bis 1:2 (Amin II-B zu Carbonsäure), insbesondere 1:1 bis 1:1,8 und ii) anschließende Umsetzung des in Schritt i) erhaltenen Reaktionsprodukts mit Fumarsäure. Das Molverhältnis von Fumarsäure zu dem in Schritt i) eingesetzten Amin IIb liegt dabei vorzugsweise im Bereich von 1:1 bis 1:3 und insbesondere im Bereich von 1:1,5 bis 1:2,5.

Hinsichtlich der Reaktionsbedingungen in den Schritten i) und ii) gilt das zuvor Gesagte.

Eine weitere Ausführungsform der vorliegenden Erfindung betrifft Entschäumerzusammensetzungen, deren Komponente b) ein Umsetzungsprodukt einer Amidinverbindung der Formel Ia mit einer vernetzend wirkenden Verbindung V umfasst. Amidinverbindungen der Formel Ia sind erhältlich durch Thermolyse von Verbindungen der Formel I, worin R¹ und R² für Wasserstoff stehen. Die Thermolyse erfolgt üblicherweise bei Temperaturen ≥ 180 °C, vorzugsweise im Bereich von 180 °C bis 220 °C. Die Reaktion kann in einem hochsiedenden Lösungsmittel durchgeführt werden, z. B. einem der für die Amidierung genannten Lösungsmittel und erfolgt insbesondere in Substanz, d. h. in Abwesenheit eines Lösungsmittels. Die Umsetzung der Amidverbindungen I zu den Amidinverbindungen Ia erfolgt vorzugsweise unter Entfernen des bei der Reaktion entstehenden Wassers. Verfahren zur Herstellung von Amidinverbindungen Ia durch intramolekulare Cyclisierung von Amiden sind z. B. aus der WO 00/11125 bekannt. Die dort beschriebenen Methoden können auch zur Herstellung der Amidinverbindungen Ia eingesetzt werden. Bevorzugt setzt man für die Herstellung der Amidinverbindungen eine Reaktionsmischung ein, die bei der Herstellung der Amidverbindung I erhalten wurde.

Bevorzugte Amidinverbindungen sind solche, die erhältlich sind durch Thermolyse von I-A, I-A', I-B, I-C, I-F, I-F', I-G und/oder I-G', insbesondere von solchen der vorgenannten Amide, worin zumindest Y² am Amidstickstoff und Y¹ an dem dem Amidstickstoff benachbarten Aminstickstoff, insbesondere alle Y¹ und Y², für Wasserstoff stehen. Bevorzugt sind insbesondere auch die Umsetzungsprodukte dieser Amidinverbindungen Ia mit Vernetzern V, insbesondere mit Fumarsäure und/oder Acrylsäure.

Unter den Amidinverbindungen Ia sind besonders bevorzugt die durch Umsetzung von I-B, insbesondere von I-B.1 erhaltenen Amidinverbindungen sowie die durch Umsetzung dieser Amidinverbindungen Ia mit Vernetzern V, insbesondere mit Acrylsäure und/oder Fumarsäure erhaltenen Produkte, speziell, wenn alle Y¹ und Y² für Wasserstoff stehen. Hinsichtlich der Umsetzung der Amidinverbindungen Ia mit Vernetzern V gilt das für die Umsetzung von Amiden I mit Vernetzern V Gesagte.

Neben der Komponente b), die in der Regel 1 bis 30 Gew.-%, vorzugsweise 3 bis 20 Gew.-% und insbesondere 5 bis 15 Gew.-% der Ölphase ausmacht, enthalten die erfindungsgemäßen zusammensetzungen als Hauptbestandteil die eingangs erwähnte in Wasser unlösliche, bei Raumtemperatur feste, sauerstoffhaltige organische Substanz. Der Anteil dieser Substanz liegt in der Regel bei 50 bis 99 Gew.-%, vorzugsweise bei 60 bis 97 Gew.-% und insbesondere bei 70 bis 95 Gew.-%, bezogen auf das Gesamtgewicht der Ölphase.

Bevorzugt weist die Komponente a) einen Schmelzpunkt von wenigstens 30°C, insbesondere von wenigstens 40°C und besonders bevorzugt wenigstens 50°C auf. Der Schmelzpunkt wird in der Regel einen Wert von 90°C und vorzugsweise 80°C nicht überschreiten.

Beispiele für geeignete Substanzen der Komponente a) sind natürlich vorkommende oder synthetisch hergestellte Alkohole mit mindestens 12 C-Atomen im Molekül. Beispiele für solche Alkohole sind native Alkohole (Fettalkohole) wie Myristylalkohol, Cetylalkohol, Stearylalkohol, Palmitylalkohol, Talgfettalkohol und Behenylalkohol, sowie synthetisch hergestellte Alkohole, beispielsweise die nach dem Ziegler-Verfahren durch Oxidation von Aluminiumalkylen erhältlichen gesättigten, geradkettigen, unverzweigten Alkohole sowie synthetische Alkohole, die durch Oxosynthese erhältlich sind. Bei letzteren handelt es sich in der Regel um Alkoholgemische, die bis zu 48 C-Atome im Molekül enthalten. Sehr wirksame Entschäumer enthalten beispielsweise Mischungen aus mindestens einem C₁₂- bis C₂₆-Alkohol und mindestens einem Fettalkohol mit 28 bis 48 C-Atomen im Molekül, vgl. EP-A-0 322 830.

Anstelle der reinen Alkohole können als Komponente a) auch Destillationsrückstände eingesetzt werden, die bei der Herstellung von Alkoholen mit einer höheren Kohlenstoffzahl durch Oxosynthese oder nach dem Ziegler-Verfahren erhältlich sind. Weitere Verbindungen, die als Bestandteil der Komponente a) in Betracht kommen, sind alkoxylierte Alkohole sowie alkoxylierte Destillationsrückstände, die bei der Herstellung von Alkoholen durch Oxosynthese oder nach dem Ziegler-Verfahren anfallen. Die alkoxylierten Verbindungen sind dadurch erhältlich, dass man die langkettigen Alkohole bzw. Destillationsrückstände mit Ethylenoxid oder mit Propylenoxid oder auch mit einer Mischung aus Ethylenoxid und Propylenoxid umsetzt. Hierbei kann man zunächst Ethylenoxid und anschließend Propylenoxid an die Alkohole oder die Destillationsrückstände anlagern oder man addiert zunächst Propylenoxid und danach Ethylenoxid. Pro OH-Gruppe des Alkohols lagert man meistens bis zu 5 mol Ethylenoxid bzw. Propylenoxid an. Besonders bevorzugt aus der Gruppe der alkoxylierten Verbindungen sind solche Reaktionsprodukte, die durch Addition von 1 oder 2 mol Ethylenoxid an 1 mol Fettalkohol bzw. Destillationsrückstand hergestellt werden.

Zu den langkettigen Alkoholen, die als Komponente a) geeignet sind, zählen auch 3-Thiaalkan-1-ole, deren S-Oxide und deren S-Dioxide - Verbindungen der allgemeinen Formel III):

Kw-CH₂-S(O)ᵥ-CHR⁹-CHR¹⁰-OH (III)

worin Kw für einen Alkylrest mit 9 bis 35, vorzugsweise 11 bis 29, C-Atomen steht, R⁹ und R¹⁰ unabhängig voneinander Wasserstoff, Methyl, Ethyl oder Phenyl bedeuten und v für 0, 1 oder 2 steht. Kw ist vorzugsweise ein linearer Alkylrest. R⁹ und R¹⁰ sind insbesondere H.

Die Verbindungen der allgemeinen Formel III sind dem Fachmann bekannt. Man erhält sie durch Umsetzung von α-Olefinen mit Mercaptoalkoholen und ggf. anschließende Oxidation der dabei erhaltenen Thiaalkanole. Die Addition der Thiolfunktion der Mercaptoalkohole erfolgt in Gegenwart von Sauerstoff oder Verbindungen, die unter den Reaktionsbedingungen (z.B. 80 bis 120°C) Radikale bilden, wie Peroxide, Hydroperoxide oder Azoverbindungen wie Azobisisobutyronitril. Die Addition der Thioalkanole an α-Olefine verläuft radikalisch mit Anti-Markovnikov-Orientierung, vgl. Angew. Chem., Bd. 82, 276-290 (1970), nach folgendem Schema: 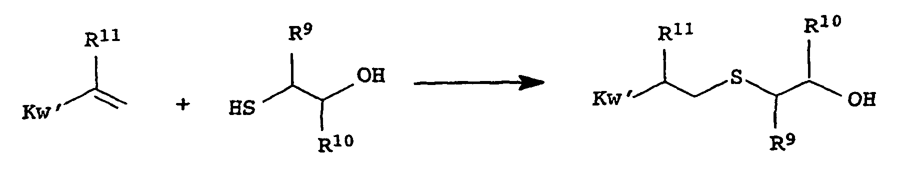 wobei Kw' für C₈-C₃₄-Alkyl, das vorzugsweise linear ist, R¹¹ für H oder C₁-C₅-Alkyl, vorzugsweise H oder CH₃ stehen und R⁹, R¹⁰ die oben genannten Bedeutungen haben.

Verbindungen der allgemeinen Formel III sind aus dem Stand der Technik bekannt, z.B. aus US 4,040,781, US 4,031,023 und WO 00/44470.

Aus den 3-Thiaalkan-1-olen erhält man durch Oxidation beispielsweise mit Wasserstoffperoxyd, PhICl₂, NaIO₄, t-BuOCl, Kaliumpermanganat, Wolframsäuren oder Persäuren (z.B. Peressigsäure oder perbenzoesäure) die entsprechenden 3-Thiaoxidalkan-1-ole.

3-Thiadioxidalkan-1-ole sind ebenfalls aus den 3-Thiaalkan-1-olen durch Oxidation mit den genannten oxidationsmitteln erhältlich, wobei man jedoch unter anderen Reaktionsbedingungen arbeitet, z.B. erhöht man die Konzentration des Oxidationsmittels und die Temperatur, bei der die Oxidation durchgeführt wird.

Zu den als Komponente a) geeigneten Substanzen zählen weiterhin Mono-, Di- und Triglyceride von Fettsäuren, z.B. von C₁₂- bis C₂₂-Carbonsäuren. Die Fettsäuren, die diesen Glyceriden zugrundeliegen, sind beispielsweise Laurinsäure, Myristinsäure, Palmitinsäure, Stearinsäure, Arachinsäure und besonders bevorzugt Behensäure. Bevorzugt sind die Mono-, Di- und insbesondere die Triglyceride der Palmitinsäure und/oder der Stearinsäure. Geeignet sind weiterhin die Ester der Fettsäuren mit C₁- bis C₁₁-Alkoholen, z.B. mit Methanol, Ethanol, Propanol, Butanol, Hexanol, oder Decanol, sowie Esterwachse, d.h. Ester von Fettsäure mit aliphatischen Alkoholen, die wenigstens 12 C-Atome aufweisen, z.B. die Fettsäureester der vorgenannten Fettalkohole, der vorgenannten synthetischen Alkohole und der vorgenannten Thiaalkanole.

Vorzugsweise umfasst die Komponente a) wenigstens einen der vorgenannten langkettigen Alkohole mit wenigstens 12 C-Atomen als Komponente a1) und gegebenenfalls davon verschiedene Substanzen a) als Komponente a2). Vorzugsweise bildet dieser Alkohol den Hauptbestandteil der Komponente a) und macht insbesondere 55 bis 100 Gew.-% der Komponente a) aus. Dementsprechend liegt der Anteil der Komponente a2) an der Komponente a) im Bereich von 0 bis 50 Gew.-%, z.B. im Bereich von 1 bis 50 Gew.-% und bevorzugt im Bereich von 5 bis 45 Gew.-%, insbesondere im Bereich von 10 bis 40 Gew.-%.

In einer bevorzugten Ausführungsform der erfindungsgemäßen Dispersionen ist der Bestandteil a1) unter nativen und synthetischen Alkanolen, insbesondere unter Fettalkoholen mit 12 bis 30 C-Atomen ausgewählt. In einer anderen bevorzugten Ausführungsform ist der Bestandteil a2) unter den Verbindungen der Formel III, insbesondere den 3-Thiaalkanolen IIIa (v = 0) ausgewählt.

Als zusätzliche Komponente a2) umfasst die Komponente a) vorzugsweise wenigstens ein Mono-, Di- und/oder Triglycerid einer Fettsäure, insbesondere ein Triglycerid. Der Anteil an Mono- Di und/oder Triglycerid beträgt vorzugsweise weniger als 50 Gew.-%, insbesondere weniger als 45 Gew.-%, z.B. 5 bis 45 Gew.-% und insbesondere 10 bis 40 Gew.-% der Komponente a).

Anstelle oder zusammen mit dem Mono-, Di- oder Triglycerid kann die Komponente a) als zusätzliche Komponente a2) einen Fettsäureester eines C₁-C₁₁-Alkohols und/oder eines aliphatischen Alkohols mit wenigstens 12 C-Atomen umfassen. Der Anteil des Fettsäureesters beträgt vorzugsweise weniger als 50 Gew.-%, insbesondere weniger als 45 Gew.-%, z.B. 5 bis 45 Gew.-% und insbesondere 10 bis 40 Gew.-% der Komponente a).

Als weitere, optionale Komponente c) der Ölphase kommen grundsätzlich solche Verbindungen und Substanzen in Betracht, die bekanntermaßen die Wirksamkeit von Entschäumerzusammensetzungen auf Basis von Öl-in-Wasser-Dispersionen verbessern. In den erfindungsgemäßen Zusammensetzungen beträgt ihr Anteil an der Ölphase in der Regel nicht mehr als 20 Gew.-% und insbesondere nicht mehr als 10 Gew.-%, z.B. 0,1 bis 20 Gew.-% und insbesondere 0,5 bis 10 Gew.-%. Vorzugsweise wird die Gesamtmenge der Komponente a) und b) nicht mehr als 20 Gew.-% und insbesondere nicht mehr als 18 Gew.-% der Ölphase betragen. Das Gewichtsverhältnis von Komponente a):c) liegt vorzugsweise oberhalb 1:1 und insbesondere oberhalb 2:1.

Als Komponente c) sind insbesondere Polyglycerinester zu nennen, die durch partielle oder vollständige Veresterung der OH-Gruppen von Oligo- oder Polyglycerinen mit wenigstens einer aliphatischen C₁₂-C₃₅-Carbonsäure erhältlich sind. Die den Estern zugrundeliegenden Polyglycerine werden soweit verestert, dass Verbindungen entstehen, die in Wasser praktisch nicht mehr löslich sind. Die Polyglycerine erhält man beispielsweise durch alkalisch katalysierte Kondensation von Glycerin bei höheren Temperaturen oder durch Umsetzung von Epichlorhydrin mit Glycerin in Gegenwart von sauren Katalysatoren. Die Polyglycerine enthalten üblicherweise mindestens 2 bis etwa 30, vorzugsweise 2 bis 12 Glycerin-Einheiten. Handelsübliche Polyglycerine enthalten Mischungen aus polymeren Glycerinen, z.B. Mischungen aus Diglycerin, Triglycerin, Tetraglycerin, Pentaglycerin und Hexaglycerin und gegebenenfalls höher kondensierten Polyglycerinen. Der Veresterungsgrad der OH-Gruppen der Polyglycerine beträgt mindestens 20 und bis zu 100, vorzugsweise 60 bis 100 %. Die zur Veresterung verwendeten langkettigen Fettsäuren können gesättigt oder auch ethylenisch ungesättigt sein. Geeignete Fettsäuren sind beispielsweise Laurinsäure, Myristinsäure, Palmitinsäure, Stearinsäure, Arachinsäure, Behensäure, Ölsäure, Hexadecensäuren, Elaidinsäure, Eicosensäuren, Docosensäuren wie Erucasäure, wobei Behensäure besonders bevorzugt ist, sowie mehrfach ungesättigte Säuren wie Octadecendiensäuren und Octatriensäuren, z.B. Linolsäure und Linolensäure sowie Mischungen der genannten Carbonsäuren. Als Entschäumer-Komponente geeignete Ester von Polyglycerinen sind beispielsweise in der EP-A-0 662 172 und EP 531 713 beschrieben.

In einer bevorzugten Ausführungsform der erfindungsgemäßen wässrigen Dispersionen enthält die Fettphase wenigstens einen langkettigen Alkohol mit einem wenigstens 12 C-Atome aufweisenden aliphatischen Kohlenwasserstoffrest, der durch ein S-Atom oder eine Gruppe SO oder SO₂ unterbrochen sein kann, als Komponente a) und wenigstens eine Komponente c), ausgewählt unter den vorstehend genannten Substanzen, die durch wenigstens 20 %ige Veresterung der OH-Gruppen von Oligo- oder Polyglycerinen mit wenigstens einer aliphatischen C₁₂-C₃₅-Carbonsäure, insbesondere Behensäure, erhältlich sind. Der Anteil der Komponente c) an der Fettphase wird dabei vorzugsweise 20 Gew.-%, insbesondere 30 Gew.-%, nicht überschreiten und liegt vorzugsweise im Bereich von 0,1 bis 20 Gew.-%, insbesondere 0,5 % bis 10 Gew.-%, jeweils bezogen auf das Gesamtgewicht der Fettphase.

Geeignet als Komponente c) sind weiterhin Ester aus einem Zuckeralkohol mit mindestens 4 OH-Gruppen oder mindestens 2 OH-Gruppen und mindestens einer intramolekularen Etherbindung und einer Fettsäure mit mindestens 20 C-Atomen im Molekül im Molverhältnis ≥ 1:1, wobei die freien OH-Gruppen dieser Ester gegebenenfalls mit C₁₂- bis C₁₈-Carbonsäuren teilweise oder ganz verestert sind. Vorzugsweise verwendet man Ester aus Tetriten, Pentiten und/oder Hexiten mit mindestens 22 C-Atome aufweisenden Fettsäuren im Molverhältnis ≥ 1:1,9. Besonders bevorzugt werden Ester aus Mannit und/oder Sorbit mit Behensäure im Molverhältnis von ≥ 1:1, vorzugsweise ≥ 1:1,9 eingesetzt. Außer den in Betracht kommenden Zuckeralkoholen Sorbit und Mannit eignen sich Adonit, Arabit, Xylit, Dulcit, Pentaerythrit, Sorbitan und Erythrit. Unter Zuckeralkoholen werden die aus Monosacchariden durch Reduktion der Carbonylfunktion entstehenden Polyhydroxyverbindungen verstanden, die selbst keine Zucker sind. Man kann auch die Anhydro-Verbindungen einsetzen, die aus Zuckeralkoholen durch intramolekulare Wasserabspaltung entstehen. Besonders wirksam sind die Ester der Zuckeralkohole mit C₂₂- bis C₃₀-Fettsäuren. Sofern man die Zuckeralkohole nur teilweise mit einer mindestens 20 C-Atome enthaltenden Fettsäure verestert, kann man die nicht veresterten OH-Gruppen des Zuckeralkohols mit einer anderen Carbonsäure verestern, z.B. eine C₁₂- bis C₁₈-Carbonsäure einsetzen. Ester dieser Art werden in der EP A-0 732 134 beschrieben, auf die wegen weiterer Details verwiesen wird.

Als Komponente c) sind weiterhin Ketone mit Schmelzpunkten oberhalb von 45°C geeignet. Sie werden meistens zusammen mit Fettalkoholen eingesetzt, deren Schmelzpunkte bei Temperaturen oberhalb von 40°C liegen. Wegen weiterer Details zu diesen Verbindungen wird auf die EP-A 696224 verwiesen.

Substanzen der Komponente c) sind weiterhin Polyethylenwachse mit einer Molmasse von mindestens 2000 sowie natürliche Wachse wie Bienenwachs oder Karnaubawachs zu nennen.

Ein weiterer optionaler Bestandteil d) der erfindungsgemäßen Zusammensetzungen sind Kohlenwasserstoffe mit einem Siedepunkt oberhalb von 200°C (bestimmt bei Normaldruck). Bevorzugt eingesetzte Kohlenwasserstoffe sind Paraffinöle, z.B. die im Handel üblichen Paraffingesnische, die auch als Weißöl bezeichnet werden. Außerdem kommen Paraffine in Betracht, deren Schmelzpunkt beispielsweise oberhalb von 50°C liegt. Der Anteil der Komponente d) an der Ölphase der erfindungsgemäßen Dispersionen liegt in der Regel im Bereich von 0 bis 15 Gew.-%, z.B. von 1 bis 10 Gew.-%, insbesondere im Bereich von 1 bis 5 Gew.-%, bezogen auf das Gesamtgewicht der Ölphase.

Der Anteil der Ölphase, d.h. der Gesamtmenge der Komponenten a) bis d), an der wässrigen Dispersion kann bis 60 Gew.-% betragen und liegt vorzugsweise im Bereich von 5 bis 50 Gew.-% und insbesondere im Bereich von 10 bis 40 Gew.-%.

Die Fett-Teilchen (Ölphase) der erfindungsgemäßen wässrigen Dispersionen weisen in der Regel im Mittel Teilchengrößen im Bereich von 0,5 µm bis 10 µm auf. Unter dem Mittel der Teilchengröße wird hier das Gewichts- bzw. Volumenmittel der jeweiligen Verteilung der Teilchengröße in einer erfindungsgemäßen Dispersion verstanden, wie es z.B. durch dynamische oder quasielastische Lichtstreuung bzw. Fraunhofer-Beugung einer verdünnten Probe der Dispersion bestimmt werden kann (siehe H. Wiese in D. Distler, wässrige Polymerdispersionen, Wiley-VCH, weinheim 1999, S. 40 ff und dort zitierte Literatur sowie H. Wiese, GIT-Fachz. Lab. 1992, S. 385-389, 762-768, 1029-1033). In der Regel wird man aus Stabilitätsgründen möglichst feinteilige Dispersionen bevorzugen, um ein Aufrahmen der Dispersion zu vermeiden. Es hat sich gezeigt, dass die entschäumende/entlüftende Wirkung der erfindungsgemäßen Dispersionen von der Teilchengröße der Fett-Teilchen abhängt. Das jeweilige Wirkoptimum kann der Fachmann anhand einfacher Reihenversuche bestimmen, wobei eine Einstellung der Teilchengröße bei der Herstellung der Dispersion in bekannter Weise möglich ist. Maßnahmen zur Einstellung der mittleren Teilchengröße sind z.B. die Variation der Emulgatorkonzentration, die Variation des Emulgatortyps, Konzentration und Art des Verdickers sowie der Druck beim Homogenisieren.

Die erfindungsgemäßen Dispersionen können als weiteren dispersen Bestandteil neben der Ölphase feinteilige, praktisch wasserunlösliche, inerte Feststoffe mit Teilchengrößen <20 µm, vorzugsweise 0,1 bis 10 µm in einer Menge von beispielsweise 0,1 bis 50, vorzugsweise 1 bis 35 % des Gewichts der Ölphase der Öl-in-Wasser-Dispersionen enthalten. Geeignete inerte Feststoffe sind z.B. Kaolin, Kreide, Bentonit, Talkum, Bariumsulfat, Siliziumdioxid, Zeolithe, Harnstoff-Formaldehyd-Pigmente, Melamin-Formaldehyd-Pigmente und mikrokristalline Cellulose, wobei die inerten anorganischen Pigmente auch hydrophobiert sein können, z.B. durch Behandlung mit Trialkylsilylhalogeniden.

Zur Stabilisierung der Ölphase in der wässrigen Dispersion enthalten die erfindungsgemäßen Zusammensetzungen vorteilhafterweise wenigstens eine oberflächenaktive Substanz. Als oberflä-chenaktive Substanzen sind grundsätzlich alle zur Stabilisierung von hydrophoben Teilchen oder Tröpfchen in wässrigen Systemen bekannten Substanzen geeignet, z.B. anionische, kationische, amphotere und/oder nichtionische Emulgatoren sowie wasserlösliche ionische und nichtionische Polymere, vorzugsweise ionisch amphiphile Copolymere, die kationische oder anionische Gruppen aufweisen und deren Molekulargewicht im Unterschied zu den Emulgatoren in der Regel oberhalb 1000 Dalton liegt. Oberflächenaktive Substanzen sind dem Fachmann hinreichend bekannt, z.B. aus Ullmanns Encyclopedia of Industrial Chemistry, 5 ed. Vol. A9, S. 297-339.

Beispiele für geeignete Emulgatoren sind: Natrium- sowie Ammoniumsalze höherer Fettsäuren, von sulfatierten Ethoxylierungsprodukte an C₆-C₂₂-Alkylphenole wie Nonylphenol oder Octylphenol, von Alkylarylsulfonaten, von Sulfonaten des Naphthalins, von Naphthalinsulfonsäureformaldehyd- oder -harnstoffkondensaten, sowie von Sulfosuccinaten als anionische Emulgatoren sowie alkoxylierte Alkylphenole, oxethylierte ungesättigte Öle wie Reaktionsprodukte aus einem Mol Ricinusöl und 30 bis 40 Mol Ethylenoxid, und Anlagerungsprodukte von Ethylenoxid und/oder Propylenoxid an aliphatische Alkohole mit in der Regel 12 bis 20 C-Atomen, z.B. an Fettalkohole, an mehrwertige Alkohole, an Amine sowie an Carbonsäuren als nichtionische Emulgatoren.

Besonders wirksame anionische Emulgatoren sind die Salze, vorzugsweise die Natrium- sowie die Ammoniumsalze von sulfonierten C₈-C₂₂-Alkyldiphenyloxiden, insbesondere von bis-sulfonierten C₈-C₂₂-Alkyldiphenyloxiden wie bis-sulfoniertes Dodecyldiphenyloxid.

Beispiele für oberflächenaktive anionische Polymerisate sind Homopolymerisate der Acrylsäure, Homopolymerisate der Methacrylsäure, Copolymerisate aus Acrylsäure und Methacrylsäure in jedem -beliebigen Molverhältnis, Copolymerisate aus Acrylsäure und Maleinsäure in jedem beliebigen Molverhältnis, Copolymerisate aus Methacrylsäure und Maleinsäure, Polyvinylsulfonsäure, Polyacrylamido-2-methylpropansulfonsäure, Styrolsulfonsäure oder die Alkalimetall- und Ammoniumsalze der genannten Polymeren mit Molmassen von beispielsweise 1500 bis 300 000. Bevorzugte anionische oberflächenaktive Polymere sind amphiphile, Säuregruppen enthaltende Copolymerisate, die
(a) hydrophobe monoethylenisch ungesättigte Monomere und
(b) monoethylenisch ungesättigte Carbonsäuren, monoethylenisch ungesättigte Sulfonsäuren, monoethylenisch ungesättigte Phosphonsäuren oder deren Mischungen,
sowie gegebenenfalls davon verschiedene Monomere (c) einpolymerisiert enthalten sowie die Salze, insbesondere die Natrium- und die Ammoniumsalze.

Beispiele für hydrophobe monoethylenisch ungesättigte Monomere sind: Styrol, Methylstyrol, Ethylstyrol, Acrylnitril, Methacrylnitril, C₂- bis C₁₈-Olefine, Ester aus monoethylenisch ungesättigten C₃- bis C₅-Carbonsäuren und einwertigen Alkoholen, Vinylalkylether, Vinylester oder deren Mischungen. Aus dieser Gruppe von Monomeren verwendet man vorzugsweise Isobuten, Diisobuten, Styrol und Acrylsäureester wie Ethylacrylat, Isopropylacrylat, n-Butylacrylat und sec.-Butylacrylat.

Beispiele für Monomere (b) sind: Acrylsäure, Methacrylsäure, Maleinsäure, Maleinsäureanhydrid, Fumarsäure, Itaconsäure, Vinylsulfonsäure, 2-Acrylamidomethylpropansulfonsäure, Acrylamido-propan-3-sulfonsäure, 3-Sulfopropylacrylat, 3-Sulfopropylmethacrylat, Styrolsulfonsäure, Vinylphosphonsäure oder deren Mischungen in einpolymerisierter Form, wobei Acrylsäure, Methacrylsäure und Maleinsäure sowie sein Anhydrid bevorzugt sind.

Die Molmasse der amphiphilen Copolymerisate beträgt in der Regel 1000 bis 100 000 und liegt vorzugsweise in dem Bereich von 1500 bis 10 000. Die Säurezahlen der anionischen amphiphilen Copolymerisate betragen in der Regel 50 bis 500, vorzugsweise 150 bis 350 mg KOH/g Polymer.

Besonders bevorzugt sind solche Entschäumer und/oder Entlüfter, die mit anionischen amphiphilen Copolymerisaten stabilisiert sind, wobei die Copolymerisate
(a) 95 bis 45 Gew.-% Isobuten, Diisobuten, Styrol oder deren Mischungen und
(b) 5 bis 55 Gew.-% Acrylsäure, Methacrylsäure, Maleinsäure, Halbester von Maleinsäure oder deren Mischungen
und gegebenenfalls bis 20 Gew.-% weitere Monomere (c) einpolymerisiert enthalten. Besonders bevorzugt werden Copolymerisate eingesetzt, die
(a) 45 bis 80 Gew.-% Styrol,
(b) 55 bis 20 Gew.-% Acrylsäure
und gegebenenfalls bis 20 Gew.-% weitere Monomere (c) einpolymerisiert enthalten. Geeignete Monomere (c) sind wasserlösliche neutrale, monoethylenisch ungesättigte Monomere, z.B. die Amide und die Hydroxy-C₂-C₄-alkylester der vorgenannte ethylenisch ungesättigten Carbonsäuren. Der Anteil der Monomere (c), bezogen auf das Gesamtgewicht aller einpolymerisierten Monomere liegt in der Regel bei nicht mehr als 20 Gew.-% insbesondere bei nicht mehr als 10 Gew.-%.

Als oberflächenaktive Polymere zur Stabilisierung der erfindungsgemäßen Zusammensetzungen kommen außerdem in Betracht:
- Pfropfpolymerisate von 5 bis 40 Gew.-Teilen N-Vinylformamid auf 100 Gew.-Teilen eines Polyalkylenglykols mit einer Molmasse von 500 bis 10 000,
- zwitterionische Polyalkylenpolyamine,
- zwitterionische Polyethylenimine,
- zwitterionische Polyetherpolyamine oder
- zwitterionische vernetzte Polyalkylenpolyamine.

Pfropfpolymerisate von N-Vinylformamid auf Polyalkylenglykolen werden beispielsweise in der WO-A-96/34903 beschrieben. Die aufgepfropften Vinylformamideinheiten können gegebenenfalls bis zu 10 % hydrolysiert sein. Der Anteil an aufgepfropften Vinylformamideinheiten beträgt vorzugsweise 20 bis 40 Gew.-%, bezogen auf Polyalkylenglykol. Vorzugsweise verwendet man Polyethylenglykole mit Molmassen von 2000 bis 10 000.

Zwitterionische Polyalkylenpolyamine und zwitterionische Polyethylenimine sind beispielsweise aus der EP-B 112592 bekannt. Solche Verbindungen sind beispielsweise dadurch erhältlich, dass man ein Polyalkylenpolyamin oder Polyethylenimin zunächst alkoxyliert, z.B. mit Ethylenoxid, Propylenoxid und/oder Butylenoxid und die Alkoxylierungsprodukte anschließend quaternisiert, z.B. mit Methylbromid oder Dimethylsulfat und die quaternierten, alkoxylierten Produkte dann mit Chlorsulfonsäure oder Schwefeltrioxid sulfatiert. Die Molmasse der zwitterionischen Polyalkylenpolyamine beträgt beispielsweise 1000 bis 9000 vorzugsweise 1500 bis 7500. Die zwitterionischen Polyethylenimine haben vorzugsweise Molmassen im Bereich von 2000 bis 1700 Dalton.

Zwitterionische Polyetherpolyamine sind beispielsweise dadurch erhältlich, dass man in einer ersten Reaktionsstufe lineare oder verzweigte Polyetherpolyamine mit Molmassen von 100 bis 800, die 2 bis 10 Stickstoffatome und mindestens 2 primäre oder sekundäre Aminoendgruppen enthalten, oder die Reaktionsprodukte der genannten Polyetherpolyamine mit bis zu einem Mol Glycidol pro NH-Gruppe der Polyetherpolyamine mit mindestens einem C₂- bis C₄-Alkylenoxid oder Tetrahydrofuran in einer Menge umsetzt, dass pro NH-Gruppe in den Polyetherpolyaminen 1 bis 50 Alkylenoxideinheiten addiert sind. In einem zweiten Verfahrensschritt werden die alkoxylierten Polyetherpolyamine mit einer Verbindung, ausgewählt aus der Gruppe von Halogensulfonsäuren, Halogenphosphorsäuren, Vinylsulfonsäure, Propansulfon, Halogenessigsäuren, Acrylsäure, Methacrylsäure, Vinylphosphorsäure und den Alkalimetall- oder Ammoniumsalzen der genannten Säuren, in der Weise umgesetzt, dass mindestens eine tertiäre Aminoendgruppe der alkoxylierten Polyetherpolyamine 2 Gruppen der Formeln

-(A)ₙ-X (IV)

oder 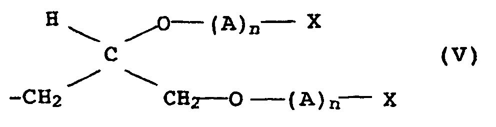 aufweist, worin die Variablen A, n und X die folgenden Bedeutungen haben:
- A: Ethylenoxid-, Propylenoxid-, Butylenoxid- oder Tetrahydrofuran-Einheit
- n: eine Zahl von 1 bis 50,
- X: eine Gruppe der Formeln:

- SO₃M, -CH₂-CH₂-SO₃M, CH₂-CH₂-CH₂-SO₃M,

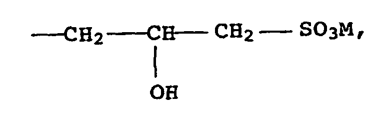

-CH₂-COOM, - CH₂-CH₂-COOM,

-PO₃M₂, -CH₂-CH₂-PO₃M₂,
ist, worin M für Wasserstoff, Alkalimetall oder Ammonium steht, wobei in Formel V ein Substituent X auch Wasserstoff sein kann.

Mindestens eine tertiäre Aminoendgruppe der alkoxylierten Polyetherpolyamine kann jedoch auch nur eine Gruppe der Formel IV oder V und eine Gruppe der folgenden Gruppen:

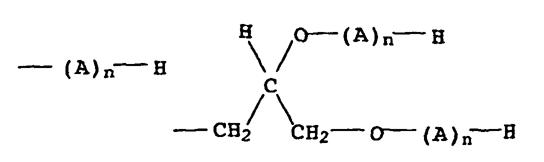

C₁- bis C₂₂-Alkyl oder C₇- bis C₂₂-Aralkyl enthalten, wobei A und n dieselbe Bedeutung haben wie in den Formeln IV und V.

In einer 3. Verfahrensstufe wird das in der 2. Verfahrensstufe erhaltene Reaktionsprodukt quaternisiert. Die Quaternisierung kann jedoch auch dadurch erreicht werden, dass man das in der 1. Reaktionsstufe erhältliche Produkt quaternisiert und anschließend die in der 2. Reaktionsstufe angegebene Umsetzung durchführt.

Von besonderem technischen Interesse sind zwitterionische Polyetherpolyamine der Formel VI: 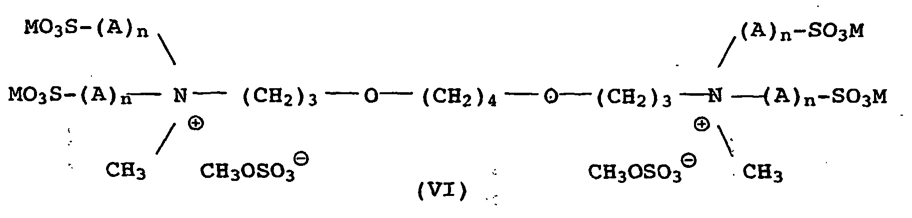 worin A für eine Gruppe der Formeln CH₂-CH₂-O oder CH(CH₃)CH₂-O-steht, M für H, Na, K, Ammonium steht und n eine Zahl von 15 bis 25 bedeutet.

Die Molmasse der zwitterionischen Polyetherpolyamine beträgt in der Regel bis zu 9000, vorzugsweise 1500 bis 7500.

Zwitterionische vernetzte Polyamine sind beispielsweise dadurch erhältlich, dass man aliphatische oder araliphatische Monoamine oder Polyamine mit 2 bis 5 primären, sekundären oder tertiären Stickstoffgruppen mit einem Vernetzungsmittel beispielsweise im Verhältnis 20:1 bis 1:1, bezogen auf molare Mengen von Aminogruppen in den Aminen und molare Mengen reaktiver Gruppen in den Vernetzern unter Bildung vernetzter Polyamine mit Molmassen von 150 bis 1500 umsetzt, die vernetzten Amine alkoxyliert, in die so erhältlichen Produkte anschließend eine anionische Gruppe einführt, indem man diese Verbindungen z.B. mit einer Halogensulfonsäure, Halogenphosphorsäure, Vinylsulfonsäure, Propansulfonsäure, Halogenessigsäure, Acrylsäure, Methacrylsäure, Vinylphosphorsäure oder den Alkalimetall- oder Ammoniumsalzen der genannten Säuregruppen enthaltenden Verbindungen umsetzt und die Produkte anschließend quaternisiert, z.B. mit Methylbromid oder Dimethylsulfat, wobei die Quaternisierung auch direkt nach der Alkoxylierung der vernetzten Polyamine erfolgen kann. Auch die oben beschriebenen Polyetheramine können als Polyamine eingesetzt werden. Beispielsweise kann man geeignete Stabilisatoren dadurch herstellen, dass man 4,9-Dioxadodecan-1,12-diamin mit Epichlorhydrin im Molverhältnis 2:1 umsetzt, das dabei erhältliche Reaktionsprodukt ethoxyliert, wobei man pro NH-Gruppe beispielsweise 20 Mol Ethylenoxid addiert, das Reaktionsprodukt dann mit Dimethylsulfat quaternisiert und das quaternisierte Produkt in einer weiteren Reaktionsstufe durch Umsetzung mit SO₃ oder Chlorsulfonsäure sulfatiert.

Vorzugsweise enthalten die erfindungsgemäßen Zusammensetzungen wenigstens eine anionische oberflächenaktive Substanz. Diese ist vorzugsweise ausgewählt unter den vorstehend genannten anionischen Emulgatoren, den vorstehend genannten Säuregruppen-tragenden, wasserlöslichen amphiphilen Polymeren und deren Mischungen.

Für die Stabilität der erfindungsgemäßen Dispersionen hat es sich als vorteilhaft erwiesen, wenn sie 0,01 bis 3 Gew.-%, bezogen auf die Ölphase, wenigstens eines Säuregruppen aufweisenden, wasserlöslichen, amphiphilen Copolymerisats, vorzugsweise eines Salzes davon und gegebenenfalls wenigstens einen anionischen und/oder nichtionischen Emulgator enthalten. Die Emulgatoren werden bevorzugt ebenfalls in einer Menge von 0,01 bis 3 Gew.-%, bezogen auf das Gesamtgewicht der Ölphase eingesetzt. Vorteilhaft sind auch solche Dispersionen, die wenigstens einen anionischen Emulgator und wenigstens einen nichtionischen Emulgator enthalten.

Häufig enthalten die erfindungsgemäßen Dispersionen zur Einstellung der für die jeweilige Anwendung erforderlichen Viskosität noch wenigstens einen Verdicker. Grundsätzlich sind alle zur Verdickung von Öl-in-Wasser-Systemen bekannten Verdicker einsetzbar. Hierzu zählen natürliche Verdicker wie Polysaccharide, Carragenate, Tragant, Alginate, Stärke, Caseinate, modifizierte organische Polymere wie Carboxymethylcellulose, synthetische Verdicker wie Polyacrylsäuren, Polyvinylalkohol, Polyethylenglycole, Polyacrylamide sowie insbesondere Copolymere des Acrylamids mit α,β-ethylenisch ungesättigten Carbonsäuren, insbesondere mit Acrylsäure, und gegebenenfalls mit Comonomeren. Diese Verdicker sind in der EP-A 149 812 beschrieben, auf deren Offenbarung hiermit Bezug genommen wird. Weitere geeignete Verdicker sind in dem Übersichtsartikel von Warren. B. Shapiro, Oil-in Water-Emulsions, Cosmetics & Toiletries, Vol. 97, 1982, 27-33 genannt. Besonders bevorzugt sind auch sogenannte Assoziatiwerdicker, z.B. hydrophob modifizierte Polyurethane, hydrophob modifizierte Celluloseether, die nach dem Prinzip der hydrophoben Wechselwirkung in wässriger Phase hochmolekulare Netzwerkstrukturen aufbauen. Assoziativverdicker sind dem Fachmann bekannt, z.B. aus J. Bielemann, Additives for Coatings, Wiley-VCH Weinheim 2000 und im Handel erhältlich, z.B. unter den Bezeichnungen RHOPLEX® und PRIMAL® TT 935 der Fa. Rohm & Haas, USA.

Ferner enthalten die erfindungsgemäßen Dispersionen häufig zur Haltbarmachung noch handelsübliche Biozide, z.B. Formaldehyd, Isothiazolverbindungen sowie die von der ICI unter der Bezeichnung PROXEL® vertriebenen Produkte.

Die Herstellung der erfindungsgemäßen Dispersionen erfolgt beispielsweise so, dass man zunächst die Komponenten aufschmilzt, die die Ölphase bilden, diese dann in Wasser emulgiert, gegebenenfalls die gewünschten oberflächenaktiven Substanzen der noch heißen Emulsion, wenn die emulgierten Öltröpfchen noch flüssig sind, zusetzt und die Öl-in-Wasser-Emulsion unter Bildung einer Öl-in-Wasser-Dispersion abkühlt. Die genannten Stabilisatoren können jedoch auch nach dem Abkühlen der Öl-in-Wasser-Emulsion, wenn die Öltröpfchen fest geworden sind, der Entschäumer-Dispersion zugesetzt werden.

Eine Verfahrensvariante zur Herstellung besonders lagerstabiler Entschäumer-Dispersionen besteht darin, dass man die geschmolzene Ölphase in einer wässrigen Lösung wenigstens einer oberflächenaktiven Substanz emulgiert und gegebenenfalls weitere Emulgatoren nach dem Emulgieren zur heißen Öl-in-Wasser-Emulsion oder nach dem Abkühlen auf beispielsweise Raumtemperatur zur Entschäumer-Dispersion zusetzt.

Wie sich gezeigt hat, neigen die erfindungsgemäßen Dispersionen, die außer dem amphiphilen anionischen Copolymerisat noch mindestens einen vorzugsweise anionischen Emulgator enthalten, noch weniger zum Verdicken bzw. Aufrahmen als diejenigen Entschäumer-Dispersionen, die nur ein amphiphiles anionisches Copolymerisat als Stabilisator enthalten.

Die erfindungsgemäßen wässrigen Dispersionen zeigen sehr gute entschäumende und/oder entlüftende Wirkungen in wässrigen Systemen, die zum Schäumen neigen. Sie sind insbesondere bei höheren Temperaturen, z.B. bei Temperaturen oberhalb von 40°C, insbesondere oberhalb 50°C und speziell oberhalb 53°C sehr wirksam. Sie haben gegenüber bekannten Entschäumern eine wesentlich verbesserte Langzeitwirkung.

Die wässrigen Dispersionen werden vorzugsweise als Entschäumer und/oder Entlüfter zur Schaumbekämpfung von zur Schaumbildung neigenden wässrigen Medien beispielsweise in der Nahrungsmittelindustrie, der Stärkeindustrie und in Kläranlagen eingesetzt. Von besonderem Interesse ist die Verwendung der erfindungsgemäßen wässrigen Dispersionen zur Schaumbekämpfung bei wässrigen Zusammensetzungen im Rahmen der Papierherstellung, z.B. bei der Zellstoffkochung, Zellstoffwäsche, der Mahlung von Papierstoff, der Papierherstellung und der Dispergierung von Pigmenten für die Papierherstellung. Bei diesen Prozessen liegt die Temperatur des zu entschäumenden wässrigen Mediums meistens oberhalb von 40°C, z.B. in dem Temperaturbereich von 45 bis 75°C.

Die erfindungsgemäßen Öl-in-Wasser-Dispersionen wirken als Entschäumer und auch als Entlüfter. In manchen Fällen ist die entlüftende Wirkung ausgeprägter als die entschäumende Wirkung. Sie können als Entschäumer oder Entlüfter verwendet werden. Sie werden auch mit Vorteil bei der Masse- und Oberflächenleimung von Papier oder in der Papierstreicherei eingesetzt. Beim Einsatz dieser Mischungen in Papierstoffsuspensionen steht beispielsweise ihre entlüftende Wirkung im Vordergrund.

Die erfindungsgemäßen Dispersionen werden in der Regel in Mengen von wenigstens 0,001 Gew.-%, bezogen auf das zu entschäumende wässrige System, vorzugsweise in einer Menge von 0,002 bis 0,5 Gew.-% und insbesondere 0,003 bis 0,3 Gew.-% eingesetzt. Bezogen auf 100 Gew.-% Papierstoff in einem schaumstoffbildenden Medium verwendet man beispielsweise 0,002 zu 0,5 Gew.-%, insbesondere 0,003 bis 0,3 Gew.-% der Entlüfter.

Die folgenden Beispiele dienen der Erläuterung der Erfindung und sind nicht einschränkend zu verstehen.

Die Prozentangaben in den Beispielen beziehen sich auf das Gewicht, sofern nicht etwas anderes aus den Angaben in den Beispielen hervorgeht.

Die entschäumende/entlüftende Wirkung wurde mit Hilfe eines Sonica-Messgerätes bestimmt, wobei man zu einer 0,38%igen Papierstoffsuspension bei 60 °C (Dispersionen D1 bis D10, VD1, VD2) bzw. bei 50 °C und 55 °C (Dispersion D11) genau soviel zugab, dass sich eine Konzentration von 5 ppm an Entschäumer, bezogen auf die Fettphase (Wirksubstanz) ergab. Man bestimmte den Luftgehalt kontinuierlich mittels Ultraschallabschwächung vor der Dosierung der Entschäumer und während der ersten 5 Minuten nach der Dosierung. Der Luftgehalt nahm zunächst ab und stieg gegen Ende der Messung wieder an. In der Tabelle 1 ist jeweils der minimale Luftgehalt der Papierstoffsuspension in Vol.-% und der Wert nach 5 min angegeben. Diese Messmethode ist beschrieben in TAPPI Journal, Vol. 71, S. 65-69 (1988). Je niedriger der minimale Luftgehalt und je niedriger das nach 5 min. erreichte Niveau, umso besser ist die entschäumende Wirkung.

Die genannte Papierstoffsuspension wurde in allen Beispielen und Vergleichsbeispielen verwendet. Sie enthielt vor Zugabe eines Entlüfters etwa 1,4 Vol.-% Luft.

Die angegebenen Teilchengrößen sind Mittelwerte, die mit Hilfe eines Coulter LS 230 Gerätes an ca. 0,1 %igen Dispersionen bestimmt wurden. Das Gerät arbeitet nach dem Prinzip der Fraunhofer-Beugung.

Als Behensäure wurde das Produkt EDENOR® C22 85R der Cognis Deutschland GmbH, Düsseldorf, eingesetzt.

### Beispiel 1:

1. Stufe: In einem 2 1-Vierhalskolben mit Thermometer, Rührer, Tropftrichter und Wasserabscheider mit Rückflusskühler wurden unter Stickstoff 917 g Behensäure bei einer Temperatur von 115°C aufgeschmolzen. Hierzu gab man anschließend innerhalb von 20 min 154,8 g Diethylentriamin. Dabei stieg die Temperatur auf bis zu 130°C an. Dann gab man 5,4 g p-Toluolsulfonsäure und 5,4 g einer 50 gew.-%igen, wässrigen Hypophosphorigen Säure zu und erhöhte die Temperatur langsam auf 160°C. Innerhalb von insgesamt 3¹/₂ h destillierten 52 ml Wasser ab. Danach kühlte man ab. Die Säurezahl des erhaltenen Wachses lag bei 7,8, die Aminzahl bei 3,7. Der Schmelzpunkt betrug 135 °C.
2. Stufe: Das erstarrte Gemisch der ersten Stufe wurde erneut aufgeschmolzen. Bei einer Innentemperatur von etwa 140°C gab man 87,1 g Fumarsäure und 2,8 g p-Toluolsulfonsäure zu wobei unter Beibehaltung der Temperatur innerhalb 1 h etwa 1,5 ml Wasser abdestillierten. Anschließend erwärmte man auf 152°C, wobei innerhalb weiterer 2 h weitere 6,5 ml Wasser abdestillierten. Die Säurezahl der erhaltenen Mischung war 34,3. Der Festpunkt der Mischung lag bei 92 °C.

### Beispiel 2 :

106,2 g des nach Beispiel 1 Stufe 1 hergestellten Wachses und 18,3 g Adipinsäure wurden unter Stickstoff bei 150°C aufgeschmolzen wobei in insgesamt 9 Stunden 3,5 ml Wasser abdestilliert wurden. Die Säurezahl der erhaltenen Mischung lag bei 27,1, der Festpunkt der Mischung war 80 °C.

### Beispiel 3: (nur Amidierung)

In einem 1 1-Dreihalskolben mit Thermometer, Rührer und Wasserabscheider mit Rückflusskühler wurden 272,48 g Behensäure unter Stickstoff-Spülung langsam auf eine Temperatur von 82°C erhitzt. Innerhalb von 12 Minuten gab man 34,8 g N,N'-Bisaminopropylethylendiamin zu, wobei die Temperatur der Mischung auf 110°C anstieg. Anschließend erhitzte man die Mischung 4 Stunden bei 155 bis 156°C bis kein weiteres Wasser mehr abdestillierte. Die Säurezahl des erhaltenen Gemischs lag bei 45,7, die Aminzahl bei 0,79. Der Festpunkt der Mischung lag bei 86 °C. Danach wurde abgekühlt und das Wachs gebrochen.

### Beispiel 4: (nur Amidierung)

In einem 1 1-Dreihalskolben mit Thermometer, Rührer und Wasserabscheider mit Rückflusskühler wurden 52,1 g N-Aminoethylethanolamin 339,6 g Behensäure 1,95 g p-Toluolsulfonsäure und 1,95 g 50 gew.-%ige wässrige Hypophosphorige Säure (H₃PO₂) zusammengegeben und langsam auf eine Temperatur von 150°C erhitzt. Innerhalb von zunächst 4 Stunden wurden 10,5 ml Wasser abdestilliert. Anschließend wurde ein Vakuum von 400 mbar angelegt und unter Beibehaltung der Temperatur weitere 5,5 ml Wasser abdestilliert. Danach wurde abgekühlt und das Wachs gebrochen. Die Säurezahl des Wachses lag bei 6,7, die Aminzahl bei 0,42 und der Festpunkt betrug 62°C.

### Beispiel 5:

In einem 1 1-Dreihalskolben mit Thermometer, Rührer und Wasserabscheider mit Rückflusskühler wurden 195,8 g des Wachses aus Beispiel 4 mit 18,3 g Adipinsäure zusammengegeben und langsam im Vakuum auf eine Temperatur von 150°C erhitzt. Innerhalb von zunächst 4 Stunden wurden 1,9 ml Wasser abdestilliert. Anschließend wurden unter Anlegen eines Vakuums von 100 mbar innerhalb weiterer 4 Stunden unter Beibehaltung der Temperatur erneut 0,5 ml Wasser entfernt. Danach wurde abgekühlt und das Wachs gebrochen. Die Säurezahl des Wachses betrug 25,9, die Aminzahl 0,15 und der Festpunkt betrug 76 °C.

### Beispiel 6:

In einem 1 1-Dreihalskolben mit Thermometer, Rührer und Wasserabscheider mit Rückflusskühler wurden 221,4 g Behensäure und 10,96 g Adipinsäure zusammengegeben und unter Stickstoff auf eine Temperatur von 82°C erhitzt. Innerhalb von 15 Minuten gab man hierzu 34,8 g N,N'-Bisaminopropylethylendiamin, wobei die Temperatur der Mischung auf 108°C anstieg. Man erwärmte dann 5 Stunden auf 155 bis 158°C, bis kein weiteres Wasser mehr abdestillierte. Die Säurezahl des Wachses betrug 45, die Aminzahl 0,96 und der Festpunkt betrug 82 °C.

### Beispiel 7: (nur Amidierung)

In einem 1 1-Dreihalskolben mit Thermometer, Rührer und Wasserabscheider mit Rückflusskühler wurden 276,7 g Behensäure unter Stickstoff auf eine Temperatur von 76°C erhitzt. Innerhalb von 20 Minuten gab man dann 50 g eines Polyethylenimins mit einer Molmasse von 1000 zu, wobei die Temperatur der Mischung auf 82°C anstieg. Man erwärmte 5 Stunden auf 155°C, bis kein weiteres Wasser mehr abdestilliert werden konnte. Die Säurezahl der Reaktionsmischung lag bei 0,76 mg KOH/g. Es wurde abgekühlt und das Wachs gebrochen. Der Festpunkt des Wachses betrug 82°C.

### Beispiel 8: (nur Amidierung)

In einem 1 1-Dreihalskolben mit Thermometer, Rührer und Wasserabscheider mit Rückflusskühler wurden 169,3 g Hydroxyethylpiperazin, 441,5 g Behensäure, 3,1 g p-Toluolsulfonsäure und 3,1 g 50 gew.-%ige wässrige Hypophosphorige Säure (H₃PO₂) zusammengegeben und auf eine Temperatur von 150°C erhitzt. Innerhalb von 5 Stunden wurden bei dieser Temperatur unter Anlegen eines Vakuums (bis 160 mm Enddruck) 14,5 ml Wasser abdestilliert. Danach wurde abgekühlt und das Wachs gebrochen. Die Säurezahl des Wachses lag bei 10,0 der Festpunkt des Wachses betrug 62°C.

### Beispiel 9:

1. Stufe: In einem 1 1-Vierhalskolben mit Thermometer, Rührer, Tropftrichter und Wasserabscheider mit Rückflusskühler wurden unter Stickstoff 850 g Behensäure bei einer Temperatur von 120°C aufgeschmolzen. Hierzu gab man anschließend innerhalb von 20 min 174,3 g N,N'-Bis(3-Aminopropyl)ethylendiamin. Dabei stieg die Temperatur auf bis zu 126°C an. Dann gab man 5,1 g p-Toluolsulfonsäure und 5,1 g einer 50 gew.-%igen, wässrigen Hypophosphorigen Säure zu und erhöhte die Temperatur langsam auf 155°C. Innerhalb von insgesamt 8 h destillierten 41 ml Wasser ab. Danach kühlte man ab. Die Säurezahl des erhaltenen Wachses lag bei 17,5. Der Schmelzpunkt betrug 114 °C.
2. Stufe: 227,1 g des in der 1. Stufe erhaltenen Gemischs wurden unter Stickstoff aufgeschmolzen. Hierzu gab man 17,4 g Fumarsäure und erwärmte anschließend auf 150°C und behielt diese Temperatur 5 h bei, wobei insgesamt 2,1 ml Wasser abdestillierten. Das nach dem Abkühlen erhaltene Wachs hatte eine Säurezahl von 26,5. Der Festpunkt der Mischung lag bei 90 °C.

### Beispiel 10:

1. Stufe (Gemisch aus Mono- und Dibehenat): In einem 1 1-Vierhalskolben mit Thermometer, Rührer, Tropftrichter und Wasserabscheider mit Rückflusskühler wurden unter Stickstoff 340,6 g Behensäure bei einer Temperatur von 120 °C aufgeschmolzen und anschließend innerhalb von 15 Minuten 103,2 g Diethylentriamin zugetropft. Dabei stieg die Temperatur auf bis zu 130 °C an. Dann wurde die Temperatur langsam auf 150 °C erhöht. Innerhalb von insgesamt 6 Stunden wurden 19,1 g Wasser abdestilliert. Danach wurde abgekühlt. Die Säurezahl des erhaltenen Wachses betrug 2,5, die Aminzahl betrug 4,39. Das erhaltene Produkt wies einen Schmelzbereich von 92 bis 104 °C auf.
2. Stufe: 150 g des in Stufe 1 erhaltenen Produkts wurden in einem Dreihalskolben mit Rührer, Innenthermometer und Wasserabscheider mit Rückflusskühler auf eine Temperatur von 195 °C erhitzt und 4 Stunden bei dieser Temperatur gehalten. Dabei destillierten 8,5 g Wasser ab. Das dabei gebildete Amidin wies eine Säurezahl von 1,6, eine Aminzahl von 2,16 und einen Schmelzpunkt von 80 °C auf.
3. Stufe: 100 g des in Stufe 2 erhaltenen Amidins und 12,5 g Fumarsäure wurden bei 130 °C in einem Dreihalskolben mit Rührer, Innenthermometer und Wasserabscheider mit Rückflusskühler aufgeschmolzen und dann 5 ¾ Stunden bei 150 °C gehalten. Dabei wurden insgesamt 0,7 g Wasser abdestilliert. Nach dem Abkühlen wurde das Produkt analysiert: Säurezahl 27,0; Aminzahl 0,775; Schmelzpunkt 78 °C.

### Beispiel 11:

1. Stufe (Gemisch aus Mono- und Dibehenat): In einem 1 1-Vierhalskolben mit Thermometer, Rührer, Tropftrichter und Wasserabscheider mit Rückflusskühler wurden unter Stickstoff 103,2 g Diethylentriamin bei 170 °C vorgelegt und aus einem beheizbaren Tropfttrichter 340,6 g Behensäure in 5 ½ h zugetropft. Dabei destillieren insgesamt 14,3 g Wasser ab. Das Produkt hat eine Säurezahl von 5,8 und eine Aminzahl von 5,8.
2. Stufe: 300 g des in Stufe 1 erhaltenen Produkts wurden in einem Dreihalskolben mit Rührer, Wasserabscheider mit Rückflusskühler und Innenthermometer mit 100 g Nonan (Siedepunkt 150 °C) gemischt und bei einer Temperatur von 140 bis 150 °C wurden innerhalb von insgesamt 8 h 14,3 g einer mit Nonan nicht mischbaren Flüssigkeit abgetrennt. (Dabei handelt es sich um ein Gemisch aus ca. 75 % Wasser und ca. 25 % Diethylentriamin). Die Aminzahl fiel in dieser Zeit von 4,02 auf 3,14.
3. Stufe: 100 g des in Stufe 2 erhaltenen Produkts und 12,5 g Fumarsäure wurden bei 130 °C in einem Dreihalskolben mit Rührer, Innenthermometer und Wasserabscheider mit Rückflusskühler aufgeschmolzen und dann 5 ¾ Stunden bei 150 °C gehalten. Dabei wurden insgesamt 0,7 g Wasser abdestilliert. Nach dem Abkühlen wurde das Produkt analysiert: Säurezahl 27,0; Aminzahl 0,775; Schmelzpunkt 78 °C.

### Herstellung der Dispersionen D1 bis D12

### Allgemeine Vorschrift A:

Eine Mischung bestehend aus 18,4 g eines Fettalkoholgemisches von C₁₂-C₂₆-Alkoholen, 7,3 g eines Glycerintriesters von C₁₆-C₁₈ Fettsäuren und 1,6 g der Komponente b) gemäß Tabelle 1 wurde bei 90°C aufgeschmolzen, wobei man eine homogene Schmelze erhielt. Diese wurde mit Hilfe eines Dispergators (Ultraturrax) in einer 90°C heißen Mischung bestehend aus 2 g Emulgator (45 gew.-%ige Lösung des Natriumsalzes des Schwefelsäurehalbesters von ethoxyliertem Isooctylphenol mit einem Ethoxylierungsgrad von 25), 0,5 g einer 32,4 gew.-%igen Wasser-in-Öl-Emulsion eines anionischen Polyacrylamids (Natriumsalz eines Copolymers aus 30 Gew.-% Acrylsäure und 70 Gew.-% Acrylamid mit einem K-Wert von 270 (0,5 gew.-% Polymer in 3 gew.-%iger, wässriger Natriumchloridlösung)), 0,04 g 10%ige Schwefelsäure 0,1 g 30%ige wässrige Formaldehydlösung und 70,06 g Wasser innerhalb 60 Sekunden emulgiert. Hierbei erhielt man eine stippenfreie Emulsion mit einer Teilchengröße d₅₀ von 4,5 µm. Diese Emulsion wurde rasch auf Raumtemperatur abgekühlt, wobei man eine Dispersion (Aushärten der Öltröpfchen) erhielt.

### Allgemeine Vorschrift B:

22,5 g einer Mischung von 3-Thia-C₂₀₋₂₈-alkan-1-olen, hergestellt nach dem Beispiel "Thiaalkanol A" der WO 00/44470, 1,6 g der Komponente b) gemäß Tabelle 1 wurden bei 90°C aufgeschmolzen, wobei man eine homogene Schmelze erhielt. Diese wurde mit Hilfe eines Dispergators (Ultraturrax) in einer 90°C heißen Lösung von 1,3 g einer 35 gew.-%igen wässrigen ammoniakalischen Lösung eines Polymers auf Basis von 50 Gew.-Teilen Styrol und 50 Gew.-Teilen Acrylsäure (erhältlich von der Fa. S.C. Johnson unter der Bezeichnung Joncryl EEC 207), 0,5 g einer 32,4 gew.-%igen Wasser-in-Öl-Emulsion eines anionischen Polyacrylamids (Produktbezeichnung oder genauere Charakterisierung), 0,04 g 10%ige Schwefelsäure 0,1 g 30%ige wässrige Formaldehydlösung und 70,06 g Wasser innerhalb 60 Sekunden emulgiert. Hierbei erhielt man eine stippenfreie Emulsion mit einer Teilchengröße d₅₀ von 2,5 µm. Diese Emulsion wurde rasch auf Raumtemperatur abgekühlt, wobei man eine Dispersion (Aushärten der Öltröpfchen) erhielt.

### Allgemeine Vorschrift C (Herstellung der Dispersion D10):

Die Herstellung der Dispersion D10 erfolgte unter Verwendung der Wirksubstanz aus Beispiel 1 analog Vorschrift A, wobei jedoch 1 g des Fettalkoholgemischs durch 1 g eines mit Behensäure zu 95 % veresterten Polyglycerins (aus 27 % Diglycerin, 44 % Triglycerin, 19 % Tetraglycerin und 10 % höherkondensierte Polyglycerine) ersetzt wurden. Die Dispersion D10 wies vergleichbare Eigenschaften wie Dispersion D1 auf.

### Allgemeine Vorschrift D (Herstellung der Dispersion D12):

Die Herstellung der Dispersion 12 erfolgte unter Verwendung der Wirksubstanz aus Beispiel 11 analog Vorschrift C wobei allerdings als Emulgator 1,1 g einer 45%igen wässrigen Lösung eines bis-sulfierten Dodecyldiphenyloxids, welches unter der Bezeichnung Dowfax 2 A 1 von der Fa. DOW Chemical erhältlich ist sowie als Stabilisator 3 g einer feinteiligen 72%igen Suspension eines feinteiligen Clays verwendet wurde.

### Vergleichs-Dispersionsbeispiel VD1:

Analog der Vorschrift A wurde die Vergleichsdispersion VD1 hergestellt, wobei anstelle der erfindungsgemäßen Wirksubstanz ein Polyglycerinester verwendet wurde, der durch 95%iges Verestern eines Polyglyceringemisches bestehend aus 27 % Diglycerin, 44 % Triglycerin, 19% Tetraglycerin und 10 % höher kondensierten Polyglycerinen mit Behensäure (=PGB) erhältlich ist.

### Vergleichs-Dispersionsbeispiel VD2:

Analog der Vorschrift B wurde die Vergleichsdispersion VD2 hergestellt, wobei anstelle der erfindungsgemäßen Wirksubstanz ein Polyglycerinester verwendet wurde, der durch 95%iges Verestern eines Polyglyceringemisches bestehend aus 27 % Diglycerin, 44 % Tri-glycerin, 19 % Tetraglycerin und 10 % höher kondensierten Polyglycerinen mit Behensäure erhältlich ist.

**Tabelle 1:**

| Entlüftende Eigenschaften der Dispersionen D1 bis D11, VD1 und VD2 | | | | |
|---|---|---|---|---|
| Dispersion | Komponente b) | Rezeptur | Min. Luft¹⁾ [Vol.-%] bei 60 °C | Luft 5 min²⁾ [Vol.-%] bei 60 °C |
| D1 | 1 | A | 0,37 | 0,84 |
| D2 | 2 | A | 0,45 | 1,19 |
| D3 | 3⁴⁾ | A | 0,49 | 1,29 |
| D4 | 4⁴⁾ | A | 0,50 | 1,15 |
| D5 | 5 | A | 0,52 | 1,03 |
| VD1 | PGB³⁾ | A | 0,71 | 1,21 |
| D6 | 6 | B | 0,64 | 1,20 |
| D7 | 7⁴⁾ | B | 0,68 | 1,22 |
| D8 | 8⁴⁾ | B | 0,69 | 1,24 |
| VD2 | PGB³⁾ | B | 0,87 | 1,16 |
| D9 | 9 | A | 0,43 | 1, 19 |
| D10 | 1 | C | 0,34 | 1,30 |
| | | | Min. Luft¹⁾ [Vol.-%] bei 50/55 °C | Luft 5 min²⁾ [Vol.-%] bei 50/55 °C |
| D11 | 10 | A | 0,43/0,39 | 0,95/1,18 |

| | | | | |
|---|---|---|---|---|
| 1) Minimaler Luftgehalt | | | | |
| 2) Luftgehalt, 5 min nach minimalem Luftgehalt | | | | |
| 3) PGB = Polyglycerinester der Behensäure | | | | |
| 4) nicht erfindungsgemäß | | | | |

Tabelle 1 belegt die gegenüber PGB-haltigen Dispersionen verbesserte entschäumende Wirkung der erfindungsgemäßen Dispersionen.

## Patentansprüche

1. Öl-in-Wasser-Dispersion, deren Ölphase die folgenden Komponenten enthält:
a) wenigstens eine in Wasser unlösliche, bei Raumtemperatur feste, sauerstoffhaltige organische Substanz, ausgewählt unter langkettigen Alkoholen mit einem wenigstens 12 C-Atome aufweisenden aliphatischen Kohlenwasserstoffrest, der gegebenenfalls durch S, SO oder SO₂ unterbrochen ist, Destillationsrückständen, die bei der Herstellung von aliphatischen Alkoholen mit wenigstens 14 C-Atomen anfallen, Mono-, Di- und Triglyceriden von Fettsäuren, Fettsäureestern von aliphatischen Alkoholen mit wenigstens 12 C-Atomen, Fettsäureestern von C₁-C₁₁-Alkanolen und deren Mischungen;
b) wenigstens ein Umsetzungsprodukt von wenigstens einer Amid-Verbindung der Formel I und/oder einer Amidinverbindung der Formel Ia, 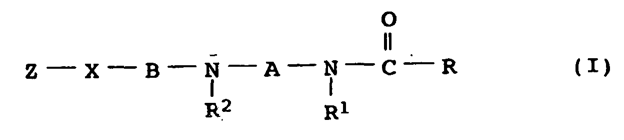 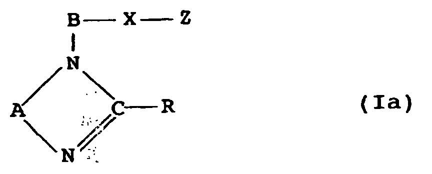 worin die Variablen R, R¹, R², A, B, X und Z die folgenden Bedeutungen aufweisen:
R ein aliphatischer Rest mit wenigstens 14 C-Atomen, der gegebenenfalls 1 oder 2 Hydroxylgruppen, 1 oder 2 Doppelbindungen und/oder 1 oder 2 Dreifachbindungen aufweisen kann,
A, B unabhängig voneinander C₂-C₂₀-Alkylen, das gegebenenfalls 1 oder 2 OH-Gruppen, 1 oder 2 Doppel- und/oder Dreifachbindungen aufweisen und/oder durch ein oder zwei zu Heteroatomen nicht benachbarte Sauerstoffatome unterbrochen sein kann, oder C₅-C₂₀-Cycloalkylen, das gegebenenfalls durch 1 oder 2 OH-Gruppen und/oder durch 1, 2, 3 oder 4 Methylgruppen substituiert sein kann und/oder eine Carbonylfunktion als Ringglied aufweisen kann,
R¹ Wasserstoff, C₁-C₁₃-Alkyl, C₅-C₁₀-Cycloalkyl, Phenyl oder eine Gruppe der Formel [A¹-X¹]ₘ-Z¹,
R² Wasserstoff, C₁-C₁₃-Alkyl, C₅-C₁₀-Cycloalkyl, Phenyl, eine Gruppe C(O)-R oder eine Gruppe der Formel [A²-X²]ₙ-Z²,
X Sauerstoff oder eine Gruppe N-R³, worin R³ die folgenden Bedeutungen aufweist: Wasserstoff, eine Gruppe C(O)-R oder eine Gruppe der Formel [A³-X³]ₚ-Z³,
Z Wasserstoff oder eine Gruppe [A⁴-X⁴]_{q}-Z⁴,
worin A¹, A², A³, A⁴ unabhängig voneinander für C₂-C₃-Alkylen stehen, X¹, X², X³, X⁴ unabhängig voneinander für Sauerstoff oder eine Gruppe NR^{a} stehen, worin R^{a} unabhängig voneinander Wasserstoff, CH₂CH₂NH₂, CH₂CH₂NHC(O)R, CH₂CH₂CH₂NH₂, CH₂CH₂CH₂NHC(O)R oder eine Gruppe C(O)-R bedeutet, Z¹, Z², Z³, Z⁴ unabhängig voneinander für Wasserstoff, CH₂CH₂NH₂, CH₂CH₂NHC(O)R, CH₂CH₂CH₂NH₂ oder CH₂CH₂CH₂NHC(O)R stehen und m und q unabhängig voneinander eine Zahl von 1 bis 20, n und p unabhängig voneinander eine Zahl von 1 bis 10 bedeuten,
wobei R¹ mit R² oder R² mit R³ und/oder je zwei Reste R³, R⁴, R^{a}, die an zwei durch eine Alkyleneinheit verbundene Stickstoffatome gebunden sind, auch für C₁-C₄-Alkylen stehen können, das eine Carbonylfunktion aufweisen kann und/oder durch 1, 2 oder 3 Methylgruppen substituiert sein kann,
oder die Gruppe B-X-Z Wasserstoff bedeutet, wenn A für C₆-C₂₀-Alkylen steht, das durch ein oder zwei zu Heteroatomen nicht benachbarte Sauerstoffatome unterbrochen ist, oder für C₅-C₂₀-Cycloalkylen, das gegebenenfalls durch 1 oder 2 OH-Gruppen und/oder durch 1, 2, 3 oder 4 Methylgruppen substituiert sein kann und/oder eine Carbonylfunktion als Ringglied aufweisen kann, steht,
wobei die Amid-Verbindung der Formel I und die Amidinverbindung der Formel Ia wenigstens eine reaktive Gruppe RG, ausgewählt unter alkoholischen OH-Gruppen und aminischen NH- oder NH₂-Gruppen aufweisen,
mit wenigstens einer vernetzend wirkenden Verbindung V, die gegenüber den reaktiven Gruppen RG eine wenigstens bifunktionelle Reaktivität aufweist,
sowie gegebenenfalls die folgenden Komponenten:
c) Substanzen, die bekanntermassen die entschäumende Wirkung von Öl-in-Wasser-Dispersionen verbessern;
d) einen oder mehrere Kohlenwasserstoffe mit einem Siedepunkt oberhalb 200°C (bei Normaldruck).

2. Dispersion nach Anspruch 1, worin R in Formel I wenigstens 19 C-Atome aufweist.

3. Dispersion nach einem der vorhergehenden Ansprüche, worin die Umsetzungsprodukte von I oder IA mit der vernetzend wirkenden Verbindung wenigstens zwei Reste der Formel R-C(O)- aufweisen, worin R die zuvor genannte Bedeutung hat.

4. Dispersion nach einem der vorhergehenden Ansprüche, worin die Variablen A, B, R¹, R², X und Z in Formel I die folgende Bedeutung haben:
A, B unabhängig voneinander C₂-C₄-Alkylen,
R¹ Wasserstoff oder [A¹-X¹]ₘ-H, worin A¹ für C₂-C₃-Alkylen und X¹ für Sauerstoff oder eine Gruppe NR^{a} stehen, worin R^{a} unabhängig voneinander Wasserstoff oder C(O)R bedeutet, und m für eine Zahl von 1 bis 10 steht,
R² Wasserstoff oder [A²-X²]ₙ-H, worin A² für C₂-C₃-Alkylen und X² für Sauerstoff oder eine Gruppe NR^{a} stehen, worin R^{a} unabhängig voneinander Wasserstoff oder C(O)R bedeutet, und n für eine Zahl von 1 bis 10 steht, oder
R¹ bildet mit R² eine C₂-C₄-Alkylengruppe oder R² bildet mit R³ eine C₂-C₄-Alkylengruppe,
X Sauerstoff oder eine Gruppe N-R³, worin R³ die folgenden Bedeutungen aufweist: Wasserstoff oder eine Gruppe C(O)-R,
Z Wasserstoff oder eine Gruppe [A⁴-X⁴]_{q}-Z⁴, worin A⁴ für C₂-C₃-Alkylen und X⁴ für Sauerstoff oder eine Gruppe NR^{a} stehen, worin R^{a} unabhängig voneinander Wasserstoff oder C(O)R und Z⁴ Wasserstoff bedeuten, und q für eine Zahl von 1 bis 10 steht.

5. Dispersion nach einem der Ansprüche 1 bis 4, worin die Variablen A, B, R¹, R², X und Z in Formel I die folgende Bedeutung haben:
A für C₅-C₂₀-Alkylen steht, das durch ein oder zwei zu Heteroatomen nicht benachbarte Sauerstoffatome unterbrochen ist,
R¹ Wasserstoff oder eine Gruppe der Formel [A¹-X¹]ₘ-Z¹, worin A¹ für C₂-C₃-Alkylen und X¹ für Sauerstoff oder eine Gruppe NR^{a} stehen, worin R^{a} unabhängig voneinander Wasserstoff oder C(O)R und Z¹ Wasserstoff bedeuten, und m für eine Zahl von 0 bis 10 steht,
R² Wasserstoff oder eine Gruppe C(O)-R
und die Gruppe Z-X-B Wasserstoff bedeutet.

6. Dispersion nach einem der vorhergehenden Ansprüche, worin die Komponente b) eine Aminzahl unterhalb 3 aufweist (nach DIN 16945).

7. Dispersion nach einem der Ansprüche 1 bis 6, worin die Komponente b) ausgewählt ist unter Umsetzungsprodukten von wenigstens einer Verbindung der allgemeinen Formel I gemäß Anspruch 1, die im Mittel wenigstens eine reaktive Gruppe RG aufweist, mit wenigstens einer wenigstens bifunktionellen, vernetzend wirkenden Verbindung v.

8. Dispersion nach Anspruch 7, wobei die vernetzend wirkende Verbindung V ausgewählt ist unter aliphatischen und cycloaliphatischen Di- und Tricarbonsäuren mit 2 bis 20 C-Atomen, deren Ester- oder Amid-bildenden Derivaten, α,β-monoethylenisch ungesättigten Mono-, Di- und Tricarbonsäuren mit 3 bis 10 C-Atomen, deren Ester- oder Amid-bildenden Derivaten, und Derivaten der Kohlensäure.

9. Dispersion nach Anspruch 8, worin die Komponente b) durch eine Säurezahl nach DIN 53402 von maximal 40 charakterisiert ist.

10. Dispersion nach einem der vorhergehenden Ansprüche, worin die Komponente b) erhältlich ist durch eine wenigstens 20 %ige Amidierung der NH- und NH₂-Gruppen eines Amins der allgemeinen Formel II 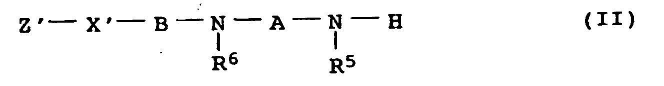 worin die Variablen R⁵, R⁶, A, B, X' und Z' die folgenden Bedeutungen aufweisen:
A, B unabhängig voneinander C₂-C₂₀-Alkylen, das gegebenenfalls 1 oder 2 OH-Gruppen, 1 oder 2 Doppel- und/oder Dreifachbindungen aufweisen und/oder durch ein oder zwei zu Heteroatomen nicht benachbarte Sauerstoffatome unterbrochen sein kann, oder C₅-C₂₀-Cycloalkylen, das gegebenenfalls durch 1 oder 2 OH-Gruppen und/oder durch 1, 2, 3 oder 4 Methylgruppen substituiert sein kann und/oder eine Carbonylfunktion als Ringglied aufweisen kann,
R⁵ Wasserstoff, C₁-C₁₃-Alkyl, C₅-C₁₀-Cycloalkyl, Phenyl oder eine Gruppe der Formel [A⁵-X⁵]ᵣ-H,
R⁶ Wasserstoff, C₁-C₁₃-Alkyl, C₅-C₁₀-Cycloalkyl, Phenyl oder eine Gruppe der Formel [A⁶-X⁶]ₛ-H,
X' Sauerstoff oder eine Gruppe N-R⁷, worin R⁷ die folgenden Bedeutungen aufweist: Wasserstoff, eine Gruppe C(O)-R oder eine Gruppe der Formel [A⁷-X⁷]ₜ-H,
Z' Wasserstoff oder eine Gruppe [A⁸-X⁸]ᵤ-H,
worin A⁵, A⁶, A⁷, A⁸ unabhängig voneinander für C₂-C₃-Alkylen stehen, X⁵, X⁶, X⁷, X⁸ unabhängig voneinander für Sauerstoff oder eine Gruppe NR^{b} stehen, worin R^{b} für Wasserstoff, CH₂CH₂NH₂ oder CH₂CH₂CH₂NH₂ steht, und r und u unabhängig voneinander eine Zahl von 0 bis 21, s und t unabhängig voneinander eine Zahl von 0 bis 11 bedeuten,
wobei R⁵ mit R⁶ oder R⁶ mit R⁷ und/oder je zwei Reste R⁷, R⁸, R^{b} die an zwei durch eine Alkyleneinheit verbundene Stickstoffatome gebunden sind, auch für C₁-C₄-Alkylen stehen können, das eine Carbonylfunktion aufweisen kann und/oder durch 1, 2 oder 3 Methylgruppen substituiert sein kann
oder die Gruppe Z'-X'-B Wasserstoff bedeutet, wenn A für C₆-C₂₀-Alkylen steht, das durch ein oder zwei zu Heteroatomen nicht benachbarte Sauerstoffatome unterbrochen ist, oder für C₅-C₂₀-Cycloalkylen steht, das gegebenenfalls durch 1 oder 2 OH-Gruppen und/oder durch 1, 2, 3 oder 4 Methylgruppen substituiert sein kann und/oder eine Carbonylfunktion als Ringglied aufweisen kann,
mit einer langkettigen Carbonsäure der Formel R-COOH oder einem Amid-bildenden Derivat dieser Carbonsäure, worin R für einen aliphatischen Rest mit wenigstens 14 C-Atomen, der gegebenenfalls 1 oder 2 Hydroxylgruppen, 1 oder 2 Doppelbindungen und/oder 1 oder 2 Dreifachbindungen aufweisen kann, steht,
und Umsetzung des bei der Amidierung erhaltenen Reaktionsprodukts mit wenigstens einer vernetzend wirkenden, wenigstens bifunktionellen Verbindung V.

11. Dispersion nach einem der vorhergehenden Ansprüche, worin die Komponente a) als Hauptbestandteil wenigstens einen langkettigen Alkohol mit einem wenigstens 12-C-Atome aufweisenden aliphatischen Kohlenwasserstoffrest umfasst.

12. Dispersion nach Anspruch 11, worin der aliphatische Alkohol ausgewählt ist unter Verbindungen der allgemeinen Formel III,
Kw-CH₂-S(O)ᵥ-CHR⁹-CHR¹⁰-OH (III)
worin Kw für einen Alkylrest mit 11 bis 35 C-Atomen steht, R⁹ und R¹⁰ unabhängig voneinander Wasserstoff, Methyl, Ethyl oder Phenyl bedeuten und v für 0, 1 oder 2 steht.

13. Dispersion nach Anspruch 11, worin der langkettige Alkohol ein aliphatischer Fettalkohol mit 12 bis 36 C-Atomen ist.

14. Dispersion nach Anspruch 11, 12 oder 13, worin die Komponente a) zusätzlich wenigstens ein Triglycerid einer Fettsäure umfasst.

15. Dispersion nach einem der Ansprüche 11 bis 14, worin die Komponente a) zusätzlich einen Fettsäureester eines aliphatischen Alkohols mit wenigstens 12 C-Atomen umfasst.

16. Dispersion nach einem der vorhergehenden Ansprüche, worin der Gewichtsanteil der Komponente b) am Gesamtgewicht der Ölphase im Bereich von 1 bis 20 Gew.-% liegt.

17. Dispersion nach einem der Ansprüche 11 bis 16, worin die Ölphase eine Komponente c) enthält, die ausgewählt ist unter Substanzen, die durch wenigstens 20 %ige Veresterung der OH-Gruppen von Oligo- oder Polyglycerinen mit wenigstens einer aliphatischen C₁₂-C₃₅-Carbonsäure erhältlich sind.

18. Dispersion nach einem der vorhergehenden Ansprüche, worin die wässrige Phase wenigstens eine oberflächenaktive Substanz enthält.

19. Dispersion nach Anspruch 18, wobei die oberflächenaktive Substanz wenigstens eine anionische oberflächenaktive Substanz umfasst, die ausgewählt ist unter anionischen Emulgatoren und Mizellen bildenden, Säuregruppen aufweisenden Polymeren.

20. Verwendung von Öl-in-Wasser-Dispersionen gemäß einem der Ansprüche 1 bis 19 als Entschäumer und/oder Entlüfter für schaumbildende wässrige Systeme.

## Claims

1. An oil-in-water dispersion, the oil phase of which comprises the following components:
a) at least one water-insoluble oxygen-containing organic substance which is solid at room temperature, chosen from long-chain alcohols with an aliphatic hydrocarbon radical having at least 12 carbon atoms and which may be interrupted by S, SO or SO₂, distillation residues which form during the preparation of aliphatic alcohols with at least 14 carbon atoms, mono-, di- and triglycerides of fatty acids, fatty acid esters of aliphatic alcohols with at least 12 carbon atoms, fatty acid esters of C₁-C₁₁-alkanols and mixtures thereof;
b) at least one reaction product of at least one amide compound of the formula I and/or an amidine compound of the formula Ia, 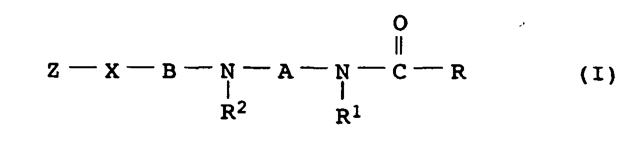 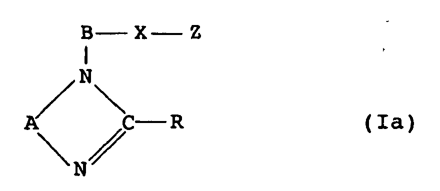 in which the variables R, R¹, R², A, B, X and Z have the following meanings:
R is an aliphatic radical with at least 14 carbon atoms, which may optionally have 1 or 2 hydroxyl groups, 1 or 2 double bonds and/or 1 or 2 triple bonds,
A, B, independently of one another, are C₂-C₂₀-alkylene which may optionally have 1 or 2 OH groups, 1 or 2 double and/or triple bonds and/or be interrupted by one or two oxygen atoms which are nonadjacent to heteroatoms, or C₅-C₂₀-cycloalkylene which may optionally be substituted by 1 or 2 OH groups and/or by 1, 2, 3 or 4 methyl groups and/or can have a carbonyl function as ring member,
R¹ is hydrogen, C₁-C₁₃-alkyl, C₅-C₁₀-cycloalkyl, phenyl or a group of the formula [A¹-X¹]ₘ-Z¹,
R² is hydrogen, C₁-C₁₃-alkyl, C₅-C₁₀-cycloalkyl, phenyl, a group C(O)-R or a group of the formula [A²-X²]ₙ-Z²,
X is oxygen or a group N-R³, in which R³ has the following meanings: hydrogen, a group C(O)-R or a group of the formula [A³-X³]ₚ-Z³,
Z is hydrogen or a group [A⁴-X⁴]_{q}-Z⁴,
in which A¹, A², A³, A⁴, independently of one another, are C₂-C₃-alkylene, X¹, X², X³, X⁴, independently of one another, are oxygen or a group NR^{a}, in which R^{a}, independently of the others, is hydrogen, CH₂CH₂NH₂, CH₂CH₂NHC(O)R, CH₂CH₂CH₂NH₂, CH₂CH₂CH₂NHC(O)R or a group C(O)-R, Z¹, Z², Z³, Z⁴, independently of one another, are hydrogen, CH₂CH₂NH₂, CH₂CH₂NHC(O)R, CH₂CH₂CH₂NH₂ or CH₂CH₂CH₂NHC(O)R, and m and q, independently of one another, are a number from 1 to 20, n and p, independently of one another, are a number from 1 to 10,
where R¹ with R² or R² with R³ and/or any two radicals R³, R⁴, R^{a} which are bonded to two nitrogen atoms bonded by an alkylene unit may also be C₁-C₄-alkylene which may have a carbonyl function and/or may be substituted by 1, 2 or 3 methyl groups,
or the group B-X-Z is hydrogen if A is C₆-C₂₀-alkylene which is interrupted by one or two oxygen atoms which are nonadjacent to heteroatoms, or is C₅-C₂₀-cycloalkylene which may optionally be substituted by 1 or 2 OH groups and/or by 1, 2, 3 or 4 methyl groups and/or may have a carbonyl function as ring member,
the amide compound of the formula I and the amidine compound of the formula Ia having at least one reactive group RG chosen from alcoholic OH groups and aminic NH or NH₂ groups,
with at least one crosslinking compound V which has at least bifunctional reactivity toward the reactive groups RG,
and optionally the following components:
c) substances which are known to improve the antifoaming action of oil-in-water dispersions;
d) one or more hydrocarbons with a boiling point above 200°C (at atmospheric pressure).

2. A dispersion as claimed in claim 1, wherein R in formula I has at least 19 carbon atoms.

3. A dispersion as claimed in either of the preceding claims, wherein the reaction products of I or IA with the crosslinking compound has at least two radicals of the formula R-C(O)-, in which R has the meaning given above.

4. A dispersion as claimed in any of the preceding claims, wherein the variables A, B, R¹, R², X and Z in formula I have the following meanings:
A, B, independently of one another, are C₂-C₄-alkylene,
R¹ is hydrogen or [A¹-X¹]ₘ-H, in which A¹ is C₂-C₃-alkylene and X¹ is oxygen or a group NR^{a}, in which R^{a}, independently of the others, is hydrogen or C(O)R, and m is a number from 1 to 10,
R² is hydrogen or [A²-X²]ₙ-H, in which A² is C₂-C₃-alkylene and X² is oxygen or a group NR^{a}, in which R^{a}, independently of the others, is hydrogen or C(O)R, and n is a number from 1 to 10, or
R¹ forms a C₂-C₄-alkylene group with R², or R² forms a C₂-C₄-alkylene group with R³,
X is oxygen or a group N-R³, in which R³ has the following meanings: hydrogen or a group C(O)-R,
Z is hydrogen or a group [A⁴-X⁴]_{q}-Z⁴, in which A⁴ is C₂-C₃-alkylene and X⁴ is oxygen or a group NR^{a}, in which R^{a}, independently of the others, is hydrogen or C(O)R and Z⁴ is hydrogen, and q is a number from 1 to 10.

5. A dispersion as claimed in any of claims 1 to 4, wherein the variables A, B, R¹, R², X and Z in formula I have the following meanings:
A is C₅-C₂₀-alkylene which is interrupted by one or two oxygen atoms which are nonadjacent to heteroatoms,
R¹ is hydrogen or a group of the formula [A¹-X¹]ₘ-Z¹, in which A¹ is C₂-C₃-alkylene and X¹ is oxygen or a group NR^{a}, in which R^{a}, independently of one another, are hydrogen or C(O)R and Z¹ is hydrogen, and m is a number from 0 to 10,
R² is hydrogen or a group C(O)-R
and the group Z-X-B is hydrogen.

6. A dispersion as claimed in any of the preceding claims, wherein component b) has an amine number below 3 (in accordance with DIN 16945).

7. A dispersion as claimed in any of claims 1 to 6, wherein component b) is chosen from reaction products of at least one compound of the formula I as in claim 1, which on average has at least one reactive group RG, with at least one at least bifunctional, crosslinking compound V.

8. A dispersion as claimed in claim 7, where the crosslinking compound V is chosen from aliphatic and cycloaliphatic di- and tricarboxylic acids with 2 to 20 carbon atoms, the ester- or amide-forming derivatives thereof, α,β-monoethylenically unsaturated mono-, di- and tricarboxylic acids with 3 to 10 carbon atoms, the ester- or amide-forming derivatives thereof, and derivatives of carbonic acid.

9. A dispersion as claimed in claim 8, wherein component b) is **characterized by** an acid number in accordance with DIN 53402 of at most 40.

10. A dispersion as claimed in any of the preceding claims, wherein component b) is obtainable by an at least 20% amidation of the NH and NH₂ groups of an amine of the formula II 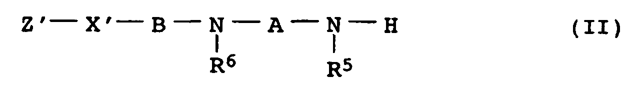 in which the variables R⁵, R⁶, A, B, X' and Z' have the following meanings:
A, B, independently of one another, are C₂-C₂₀-alkylene which may optionally have 1 or 2 OH groups, 1 or 2 double and/or triple bonds and/or be interrupted by one or two oxygen atoms which are nonadjacent to heteroatoms, or C₅-C₂₀-cycloalkylene which may optionally be substituted by 1 or 2 OH groups and/or by 1, 2, 3 or 4 methyl groups and/or may have a carbonyl function as ring member,
R⁵ is hydrogen, C₁-C₁₃-alkyl, C₅-C₁₀-cycloalkyl, phenyl or a group of the formula [A⁵-X⁵]ᵣ-H,
R⁶ is hydrogen, C₁-C₁₃-alkyl, C₅-C₁₀-cycloalkyl, phenyl or a group of the formula [A⁶-X⁶]ₛ-H,
X' is oxygen or a group N-R⁷, in which R⁷ has the following meanings: hydrogen, a group C(O)-R or a group of the formula [A⁷-X⁷]ₜ-H,
Z' is hydrogen or a group [A⁸-X⁸]ᵤ-H,
in which A⁵, A⁶, A⁷, A⁸, independently of one another, are C₂-C₃-alkylene, X⁵, X⁶, X⁷, X⁸, independently of one another, are oxygen or a group NR^{b} in which R^{b} is hydrogen, CH₂CH₂NH₂ or CH₂CH₂CH₂NH₂, and r and u, independently of one another, are a number from 0 to 21, s and t, independently of one another, are a number from 0 to 11,
where R⁵ with R⁶ or R⁶ with R⁷ and/or any two radicals R⁷, R⁸, R^{b} which are bonded to two nitrogen atoms bonded via an alkylene unit may also be C₁-C₄-alkylene which may have a carbonyl function and/or may be substituted by 1, 2 or 3 methyl groups,
or the group Z'-X'-B is hydrogen if A is C₆-C₂₀-alkylene which is interrupted by one or two oxygen atoms which are nonadjacent to heteroatoms, or is C₅-C₂₀-cycloalkylene which may optionally be substituted by 1 or 2 OH groups and/or by 1, 2, 3 or 4 methyl groups and/or may have a carbonyl function as ring member,
with a long-chain carboxylic acid of the formula R-COOH or an amide-forming derivative of this carboxylic acid in which R is an aliphatic radical with at least 14 carbon atoms, which may optionally have 1 or 2 hydroxyl groups, 1 or 2 double bonds and/or 1 or 2 triple bonds,
and reaction of the reaction product obtained in the amidation with at least one crosslinking, at least bifunctional compound V.

11. A dispersion as claimed in any of the preceding claims, wherein component a) comprises, as main constituent, at least one long-chain alcohol with an aliphatic hydrocarbon radical having at least 12 carbon atoms.

12. A dispersion as claimed in claim 11, wherein the aliphatic alcohol is chosen from compounds of the formula III,
Kw-CH₂-S(O)ᵥ-CHR⁹-CHR¹⁰-OH (III)
in which Kw is an alkyl radical with 11 to 35 carbon atoms, R⁹ and R¹⁰, independently of one another, are hydrogen, methyl, ethyl or phenyl, and v is 0, 1 or 2.

13. A dispersion as claimed in claim 11, wherein the long-chain alcohol is an aliphatic fatty alcohol with 12 to 36 carbon atoms.

14. A dispersion as claimed in claim 11, 12 or 13, wherein component a) additionally comprises at least one triglyceride of a fatty acid.

15. A dispersion as claimed in any of claims 11 to 14, wherein component a) additionally comprises a fatty acid ester of an aliphatic alcohol with at least 12 carbon atoms.

16. A dispersion as claimed in any of the preceding claims, wherein the proportion by weight of component b), based on the total weight of the oil phase, is in the range from 1 to 20% by weight.

17. A dispersion as claimed in any of claims 11 to 16, wherein the oil phase comprises a component c) which is chosen from substances obtainable by at least 20% esterification of the OH groups of oligo- or polyglycerols with at least one aliphatic C₁₂-C₃₅-carboxylic acid.

18. A dispersion as claimed in any of the preceding claims, wherein the aqueous phase comprises at least one surface-active substance.

19. A dispersion as claimed in claim 18, where the surface-active substance comprises at least one anionic surface-active substance chosen from anionic emulsifiers and micelle-forming polymers having acid groups.

20. The use of oil-in-water dispersions as claimed in any of claims 1 to 19 as antifoams and/or deaerators for foam-forming aqueous systems.

## Revendications

1. Dispersion huile dans l'eau, dont la phase huileuse contient les composants suivants :
a) au moins une substance organique contenant de l'oxygène, solide à la température ambiante, insoluble dans l'eau, choisie parmi des alcools à longue chaîne comportant un radical d'hydrocarbure aliphatique présentant au moins 12 atomes de C, qui est éventuellement interrompu par S, SO ou SO₂, des résidus de distillation qui se forment lors de la préparation d'alcools aliphatiques comportant au moins 14 atomes de C, des monoglycérides, diglycérides et triglycérides d'acides gras, des esters d'acides gras d'alcools aliphatiques comportant au moins 12 atomes de C, des esters d'acides gras d'alcanols en C₁-C₁₁ et leurs mélanges,
b) au moins un produit de la réaction d'au moins un composé amide de la formule I et/ou d'un composé amidine de la formule Ia, 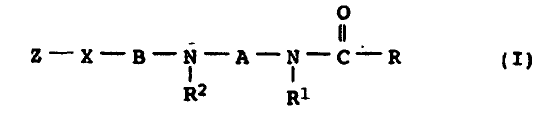 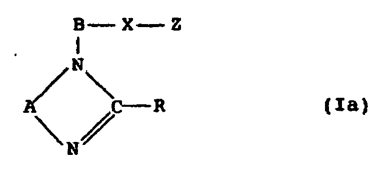 dans lesquelles les variables R, R¹, R², A, B, X et Z présentent les significations suivantes :
R est un radical aliphatique comportant au moins 14 atomes de C, qui peut éventuellement présenter 1 ou 2 groupes hydroxy, 1 ou 2 doubles liaisons et/ou 1 ou 2 triples liaisons,
A, B représentent indépendamment l'un de l'autre de l'alkylène en C₂-C₂₀, qui peut présenter éventuellement 1 ou 2 groupes OH, 1 ou 2 doubles et/ou triples liaisons et/ou être interrompu par un ou deux atomes d'oxygène non voisins d'hétéroatomes, ou du cycloalkylène en C₅-C₂₀, qui peut éventuellement être substitué par 1 ou 2 groupes OH et/ou par 1, 2, 3 ou 4 groupes méthyle, et/ou peut présenter une fonction carbonyle, comme terme du cycle,
R¹ représente de l'hydrogène, de l'alkyle en C₁-C₁₃, du cycloalkyle en C₅-C₁₀, du phényle ou un groupe de la formule (A¹-X¹)ₘ-Z¹,
R² représente de l'hydrogène, de l'alkyle en C₁-C₁₃, du cycloalkyle en C₅-C₁₀, du phényle ou un groupe C(O)-R ou un groupe de la formule (A²-X²)ₙ-Z²,
X représente de l'oxygène ou un groupe N-R³, où R³ présente les significations suivantes : l'hydrogène, un groupe C(O)-R ou un groupe de la formule (A³-X³)ₚ-Z³,
Z représente de l'hydrogène ou un groupe (A⁴-X⁴)_{q}-Z⁴,
où A¹, A², A³, A⁴ représentent indépendamment l'un de l'autre de l'alkylène en C₂-C₃, X¹, X², X³, X⁴ représentent indépendamment l'un de l'autre de l'oxygène ou un groupe NR^{a}, où R^{a} représente indépendamment de l'hydrogène, CH₂CH₂NH₂, CH₂CH₂NHC(O)R, CH₂CH₂CH₂NH₂, CH₂CH₂CH₂NHC(O)R ou un groupe C(O)-R, Z¹, Z², Z³, Z⁴ représentent indépendamment l'un de l'autre de l'hydrogène, CH₂CH₂NH₂, CH₂CH₂NHC(O)R, CH₂CH₂CH₂NH₂ ou CH₂CH₂CH₂NHC(O)R, et m et q représentent indépendamment l'un de l'autre un nombre de 1 à 20, et n et p représentent indépendamment l'un de l'autre un nombre de 1 à 10,
R¹ avec R² ou R² avec R³ et/ou chaque fois deux radicaux R³, R⁴, R^{a}, qui sont liés à deux atomes d'azote reliés par une unité alkylène, pouvant aussi représenter de l'alkylène en C₁-C₄ qui peut présenter une fonction carbonyle et/ou être substitué par 1, 2 ou 3 groupes méthyle,
ou le groupe B-X-Z représentant de l'hydrogène lorsque A représente de l'alkylène en C₆-C₂₀ qui est interrompu par un ou deux atomes d'oxygène non voisins d'hétéroatomes, ou du cycloalkylène en C₅-C₂₀, qui peut être substitué éventuellement par 1 ou 2 groupes OH et/ou par 1, 2, 3 ou 4 groupes méthyle et/ou peut présenter une fonction carbonyle comme terme du cycle,
le composé amide de la formule I et le composé amidine de la formule Ia présentant au moins un groupe réactif RG, choisi parmi des groupes OH alcooliques et des groupes NH ou NH₂ aminés,
avec au moins un composé V à action de réticulation qui présente une réactivité au moins bifonctionnelle vis-à-vis des groupes réactifs RG,
ainsi qu'éventuellement les composants suivants :
c) des substances qui améliorent d'une manière connue l'action antimousse de dispersions huile dans l'eau,
d) un ou plusieurs hydrocarbures ayant un point d'ébullition supérieur à 200°C (sous pression normale).

2. Dispersion suivant la revendication 1, dans laquelle R présente dans la formule I au moins 19 atomes de C.

3. Dispersion suivant l'une des revendications précédentes, dans laquelle les produits de réaction de I ou de IA avec le composé à action de réticulation présentent au moins deux radicaux de la formule R-C(O)-, dans laquelle R a la signification auparavant mentionnée.

4. Dispersion suivant l'une des revendications précédentes, dans laquelle les variables A, B, R¹, R², X et Z ont dans la formule I la signification suivante :
A, B représentent indépendamment l'un de l'autre de l'alkylène en C₂-C₄,
R¹ représente de l'hydrogène ou (A¹-X¹)ₘ-H où A¹ représente de l'alkylène en C₂-C₃ et X¹ de l'oxygène ou un groupe NR^{a}, où R^{a} représente indépendamment de l'hydrogène ou C(O)-R, et m est un nombre de 1 à 10,
R² représente de l'hydrogène ou (A²-X²)ₙ-H où A² représente de l'alkylène en C₂-C₃ et X² de l'oxygène ou un groupe NR^{a}, où R^{a} représente indépendamment de l'hydrogène ou C(O)-R, et n est un nombre de 1 à 10, ou
R¹ forme avec R² un groupe alkylène en C₂-C₄ ou R² forme avec R³ un groupe alkylène en C₂-C₄,
X représente de l'oxygène ou un groupe N-R³, où R³ présente les significations suivantes : de l'hydrogène ou un groupe C(O)-R,
Z représente de l'hydrogène ou un groupe (A⁴-X⁴)_{q}-Z⁴, où A⁴ représente de l'alkylène en C₂-C₃ et X⁴ de l'oxygène ou un groupe NR^{a}, où R^{a} représente indépendamment de l'hydrogène ou C(O)-R et Z⁴ de l'hydrogène, et q représente un nombre de 1 à 10.

5. Dispersion suivant l'une des revendications 1 à 4, dans laquelle les variables A, B, R¹, R², X et Z ont dans la formule I la signification suivante :
A représente de l'alkylène en C₅-C₂₀, qui est interrompu par un ou deux atomes d'oxygène non voisins d'hétéroatomes,
R¹ représente de l'hydrogène ou un groupe de la formule (A¹-X¹)ₘ-Z¹, où A¹ représente de l'alkylène en C₂-C₃ et X¹ de l'oxygène ou un groupe NR^{a}, R^{a} représentant indépendamment de l'hydrogène ou C(O)-R, et Z¹ de l'hydrogène et m un nombre de 0 à 10,
R² représente de l'hydrogène ou un groupe C(O)-R,
et le groupe Z-X-B représente de l'hydrogène.

6. Dispersion suivant l'une des revendications précédentes, dans laquelle le composant b) présente un indice d'amine inférieur à 3 (selon la norme DIN 16945).

7. Dispersion suivant l'une des revendications 1 à 6, dans laquelle le composant b) est choisi parmi des produits de la réaction d'au moins un composé de la formule générale I suivant la revendication 1, qui présente en moyenne au moins un groupe réactif RG, avec au moins un composé V à action de réticulation, au moins bifonctionnel.

8. Dispersion suivant la revendication 7, dans laquelle le composé V à action de réticulation est choisi parmi des acides dicarboxyliques et tricarboxyliques aliphatiques et cycloaliphatiques comportant 2 à 20 atomes de C, leurs dérivés formateurs d'ester ou d'amide, des acides monocarboxyliques, dicarboxyliques et tricarboxyliques α,β-monoéthyléniquement insaturés comportant 3 à 10 atomes de C, leurs dérivés formateurs d'ester ou d'amide et des dérivés de l'acide carbonique.

9. Dispersion suivant la revendication 8, dans laquelle le composant b) est **caractérisé par** un indice d'acide selon la norme DIN 53402 d'au maximum 40.

10. Dispersion suivant l'une des revendications précédentes, dans laquelle le composant b) peut être obtenu par une amidification à au moins 20% des groupes NH et NH₂ d'une amine de la formule générale II : 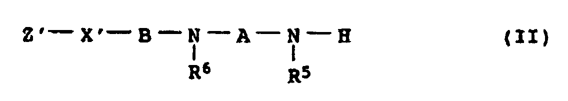 dans laquelle les variables R⁵, R⁶, A, B, X' et Z' présentent les significations suivantes :
A, B représentent indépendamment l'un de l'autre de l'alkylène en C₂-C₂₀, qui peut présenter éventuellement 1 ou 2 groupes OH, 1 ou 2 doubles et/ou triples liaisons et/ou peut être interrompu par un ou deux atomes d'oxygène non voisins d'hétéroatomes, ou du cycloalkylène en C₅-C₂₀, qui peut être substitué éventuellement par 1 ou 2 groupes OH et/ou par 1, 2, 3 ou 4 groupes méthyle, et/ou peut présenter une fonction carbonyle, comme terme du cycle,
R⁵ représente de l'hydrogène, de l'alkyle en C₁-C₁₃, du cycloalkyle en C₅-C₁₀, du phényle ou un groupe de la formule (A⁵-X⁵)ᵣ-H,
R⁶ représente de l'hydrogène, de l'alkyle en C₁-C₁₃, du cycloalkyle en C₅-C₁₀, du phényle ou un groupe de la formule (A⁶-X⁶)ₛ-H,
X' représente de l'oxygène ou un groupe N-R⁷, où R⁷ présente les significations suivantes : l'hydrogène, un groupe C(O)-R ou un groupe de la formule (A⁷-X⁷)ₜ-H,
Z' représente de l'hydrogène ou un groupe (A⁸-X⁸)ᵤ-H,
où A⁵, A⁶, A⁷, A⁸ représentent indépendamment l'un de l'autre de l'alkylène en C₂-C₃, X⁵, X⁶, X⁷, X⁸ représentent indépendamment l'un de l'autre de l'oxygène ou un groupe NR^{b}, R^{b} représentant de l' hydrogène, CH₂CH₂NH₂ ou CH₂CH₂CH₂NH₂, et r et u représentent indépendamment l'un de l'autre un nombre de 0 à 21, et s et t représentent indépendamment l'un de l'autre un nombre de 0 à 11,
R⁵ avec R⁶ ou R⁶ avec R⁷ et/ou chaque fois deux radicaux R⁷, R⁸, R^{b}, qui sont liés à deux atomes d'azote reliés par une unité alkylène, pouvant également représenter de l'alkylène en C₁-C₄ qui peut présenter une fonction carbonyle et/ou être substitué par 1, 2 ou 3 groupes méthyle,
ou le groupe Z'-X'-B représente de l'hydrogène, lorsque A représente de l'alkylène en C₆-C₂₀ qui est interrompu par un ou deux atomes d'oxygène non voisins d'hétéroatomes, ou du cycloalkylène en C₅-C₂₀, qui peut être substitué éventuellement par 1 ou 2 groupes OH et/ou par 1, 2, 3 ou 4 groupes méthyle et/ou présenter une fonction carbonyle comme terme du cycle,
avec un acide carboxylique à longue chaîne de la formule R-COOH ou un dérivé formateur d'amide de cet acide carboxylique, où R représente un radical aliphatique comportant au moins 14 atomes de C qui peut éventuellement présenter un ou deux groupes hydroxyle, 1 ou 2 doubles liaisons et/ou 1 ou 2 triples liaisons,
et par réaction du produit de la réaction obtenu au cours de l'amidification avec au moins un composé V à action de réticulation, au moins bifonctionnel.

11. Dispersion suivant l'une des revendications précédentes, dans laquelle le composant a) comporte, comme élément principal, au moins un alcool à longue chaîne comportant un radical d'hydrocarbure aliphatique présentant au moins 12 atomes de C.

12. Dispersion suivant la revendication 11, dans laquelle l'alcool aliphatique est choisi parmi des composés de la formule générale III :
Kw-CH₂-S(O)ᵥ-CHR⁹-CHR¹⁰-OH (III)
dans laquelle Kw représente un radical alkyle comportant 11 à 35 atomes de C, R⁹ et R¹⁰ représentent indépendamment l'un de l'autre de l'hydrogène, du méthyle, de l'éthyle ou du phényle et v vaut 0, 1 ou 2.

13. Dispersion suivant la revendication 11, dans laquelle l'alcool à longue chaîne est un alcool gras aliphatique comportant 12 à 36 atomes de C.

14. Dispersion suivant là revendication 11, 12 ou 13, dans laquelle le composant a) comporte en supplément au moins un triglycéride d'un acide gras.

15. Dispersion suivant l'une des revendications 11 à 14, dans laquelle le composant a) comporte en supplément un ester d'acide gras d'un alcool aliphatique comportant au moins 12 atomes de C.

16. Dispersion suivant l'une des revendications précédentes, dans laquelle la fraction en poids du composant b) par rapport au poids total de la phase huileuse est de l'ordre de 1 à 20% en poids.

17. Dispersion suivant l'une des revendications 11 à 16, dans laquelle la phase huileuse contient un composant c) qui est choisi parmi des substances qui peuvent être obtenues par estérification à au moins 20% des groupes OH d'oligoglycérines ou de polyglycérines avec au moins un acide carboxylique aliphatique en C₁₂-C₃₅.

18. Dispersion suivant l'une des revendications précédentes, dans laquelle la phase aqueuse contient au moins une substance tensioactive.

19. Dispersion suivant la revendication 18, dans laquelle la substance tensioactive comporte au moins une substance tensioactive anionique choisie parmi des agents émulsionnants anioniques et des polymères formant des micelles et présentant des groupes acides.

20. Utilisation de dispersions huile dans l'eau suivant une des revendications 1 à 19, comme agents antimoussants et/ou désaérants pour des systèmes aqueux générateurs de mousse.
